# EUROPEAN PATENT APPLICATION

(11) **EP 3 007 124 A1**
(43) Date of publication of application: **13.04.2016**
(21) Application number: 14804219.5
(22) Date of filing: 26.05.2014
(51) Int. Cl.: G06Q 30/02, G06F 13/00, G06Q 30/08

(54) **INFORMATION PROCESSING SYSTEM AND INFORMATION PROCESSING METHOD**

(30) Priority: 27.05.2013 WO PCT/JP2013/064663; 09.09.2013 JP 2013185948
(71) Applicant: KPI Solutions Co., Ltd., Chuo-ku, Tokyo 104-0061 (JP)
(72) Inventor: ISHIDA, Tetsuro, Tokyo 108-0023 (JP); HEUNGMANY, Bounnong, Tokyo 1040061 (JP)
(74) Representative: Cabinet Plasseraud
(86) International application number: PCT/JP2014/063830
(87) International publication number: WO 2014/192690

(57) **Abstract**

There are provided an information processing system and an information processing method capable of distributing an advertisement properly. The information processing system includes: a cookie setting unit 231 for setting, in a browser of a client terminal 400, a cookie on the domain of an advertising medium providing site containing a user identifier for identifying a user in response to a request from the client terminal 400 based on a program contained in page information on the advertising medium providing site; a cookie checking unit 232 for acquiring browsing information from the browser of the client terminal 400 using the cookie on the domain of the advertising medium providing site; an SSP unit 210 for receiving, from the client terminal 400 having accessed the advertising medium providing site, a notification that an advertising display slot of the advertising medium providing site is present; and a bidding determination unit 234 for determining a bidding condition for the advertising display slot of the advertising medium providing site using the browsing information.

## Description

### Technical Field

Some aspects of the present invention relate to an information processing system and an information processing method.

### Background Art

In recent years, many advertisements have been displayed on each website available on the internet. Here, various measures are taken to select advertisements to be presented to a user, because a selection of advertisements expected to be highly relevant to the concerns of the user, rather than a random selection, can enhance advertising effectiveness. For example, Patent Document 1 discloses a technique for acquiring a search query searched by a user from a cookie to present advertisements associated with the search query.

### Citation List

### Patent Document

Patent Document 1: JP 2011-258208 A

### Disclosure of the Invention

### Problem to be Solved by the Invention

However, when the technique using a cookie like the technique disclosed in Patent Document 1, information stored in the cookie can be read only from a server having a domain from which the cookie has been issued.

It is common practice that a business operator different from an advertiser or a website operator for displaying advertisements performs an auction process for determining an advertisement to be displayed to a user. Therefore, it is considered that an advertisement distributer sets, in a user's browser, a cookie on the domain thereof to distribute the advertisement using the cookie. However, since it is rare that the user visits a website of the advertisement distributer, a technique is needed, such as to embed, for example, in page information on any other website, a program for issuing a cookie of the advertisement distributer in order to set, in the user's browser, the cookie from the advertisement distributer.

On the other hand, with the recent growing awareness of security, a browser that does not accept the setting of a cookie (third-party cookie) from a domain (third-party domain) not accessed by a user on purpose has been becoming popular. Since the above technique cannot be used in such a browser that does not accept the setting of a third-party cookie, it is difficult for the advertisement distributer to distribute an advertisement properly.

Some aspects of the present invention have been made in view of the above problem, and it is one object thereof to provide an information processing system and an information processing method capable of distributing an advertisement properly.

### Means for Solving the Problem

One information processing system according to the present invention includes: means for setting, in a browser of a client terminal, a cookie on the domain of an advertising medium providing site containing a user identifier for identifying a user in response to a request from the client terminal based on a program contained in page information on the advertising medium providing site; means for acquiring browsing information from the browser of the client terminal using the cookie on the domain of the advertising medium providing site; means for receiving, from the client terminal having accessed the advertising medium providing site, a notification that an advertising display slot of the advertising medium providing site is present; and means for determining a bidding condition for the advertising display slot of the advertising medium providing site using the browsing information.

One information processing system according to the present invention includes: means for setting, in a browser of a client terminal, a first cookie on the domain of an advertising medium distributing site containing a first user identifier for identifying a user in response to a request from the client terminal based on a program contained in page information on the advertising medium distributing site; means for managing matching information indicative of a correspondence relationship between a second user identifier set in a second cookie set on the client terminal by another information processing device, and the first user identifier; means for receiving, from the client terminal having accessed the advertising medium distributing site, a notification that an advertising display slot of the advertising medium distributing site is present; means for checking the first user identifier contained in the first cookie set on the client terminal; and means for requesting the other information processing device to bid for the advertising display slot of the advertising medium distributing site along with the second user identifier associated with the first user identifier in the matching information.

One information processing method according to the present invention causes an information processing system to execute: a step of setting, in a browser of a client terminal, a cookie on the domain of an advertising medium providing site containing a user identifier for identifying a user in response to a request from the client terminal based on a program contained in page information on the advertising medium providing site; a step of acquiring browsing information from the browser of the client terminal using the cookie on the domain of the advertising medium providing site; a step of receiving, from the client terminal having accessed the advertising medium providing site, a notification that an advertising display slot of the advertising medium providing site is present; and a step of determining a bidding condition for the advertising display slot of the advertising medium providing site using the browsing information.

One information processing method according to the present invention causes an information processing system to execute: a step of setting, in a browser of a client terminal, a first cookie on the domain of an advertising medium distributing site containing a first user identifier for identifying a user in response to a request from the client terminal based on a program contained in page information on the advertising medium distributing site; a step of managing matching information indicative of a correspondence relationship between a second user identifier set in a second cookie set on the client terminal by another information processing device, and the first user identifier; a step of receiving, from the client terminal having accessed the advertising medium distributing site, a notification that an advertising display slot of the advertising medium distributing site is present; a step of checking the first user identifier contained in the first cookie set on the client terminal; and a step of requesting the other information processing device to bid for the advertising display slot of the advertising medium distributing site along with the second user identifier associated with the first user identifier in the matching information.

In the present invention, the terms "unit" or "means," "device," and "system" do not merely mean physical means, and include a case where the function of the "unit" or "means," "device," or "system" is implemented by software. Further, the function of one "unit" or "means," "device," or "system" may be implemented by two or more physical means or devices, or the functions of two or more "units" or "means," "devices," or "systems" may be implemented by one physical means or device.

### Effect of the Invention

According to the present invention, there can be provided an information processing system and an information processing method capable of distributing an advertisement properly.

### Brief Description of the Drawings

FIG. 1 is a functional block diagram illustrating the functional configuration of an advertisement distribution system according to Embodiment 1 of the present invention.
FIG. 2 is a functional block diagram illustrating an example of the functional configuration of an SSP unit illustrated in FIG. 1.
FIG. 3 is a functional block diagram illustrating an example of the functional configuration of a DSP unit illustrated in FIG. 1.
FIG. 4 is a flowchart illustrating an example of a processing flow of the SSP unit illustrated in FIG. 1.
FIG. 5 is a flowchart illustrating an example of a processing flow of the DSP unit illustrated in FIG. 1.
FIG. 6 is a block diagram illustrating a hardware configuration capable of implementing an advertiser server or a advertisement bidding device, an advertisement network server 200, and an advertising medium distribution server illustrated in FIG. 1.
FIG. 7 is a functional block diagram illustrating an example of the functional configuration of an advertisement distribution system according to Embodiment 2 of the present invention.
FIG. 8 is a functional block diagram illustrating an example of the functional configuration of a device for SSP illustrated in FIG. 7.
FIG. 9 is a functional block diagram illustrating an example of the functional configuration of a device for DSP illustrated in FIG. 7.
FIG. 10 is a flowchart illustrating an example of a flow of processing of a device for DMP illustrated in FIG. 7.
FIG. 11 is a flowchart illustrating an example of a flow of processing of the advertisement distribution system illustrated in FIG. 7.
FIG. 12 is a flowchart illustrating an example of the flow of processing of the advertisement distribution system illustrated in FIG. 7.
FIG. 13 is a flowchart illustrating an example of the flow of processing of the advertisement distribution system illustrated in FIG. 7.

### Mode for Carrying out the Invention

Embodiments of the present invention will be described below. Note that the same or similar elements in the following description and the drawings to be referred to are given the same or similar reference numerals.

### (Embodiment 1)

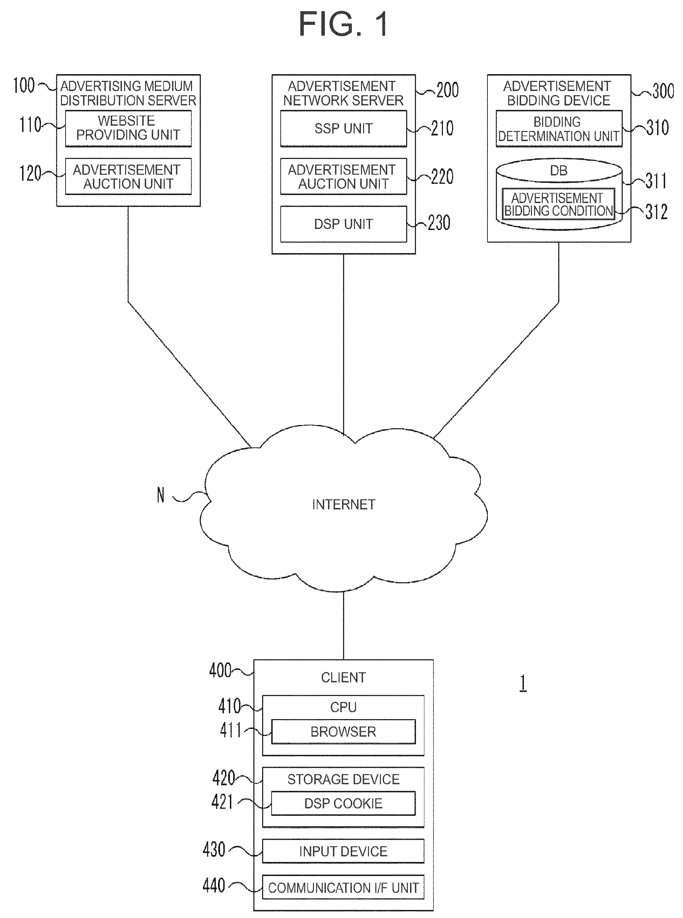

FIG. 1 to FIG. 6 are diagrams/charts for describing Embodiment 1. The embodiment will be described below with reference to these diagrams/charts along the following flow: First, an outline of a system according to the embodiment will be described in section "1.1." Next, the functional configuration of the system will be described in section "1.2." In section "1.3," a flow of processing according to respective devices will be described. In section "1.4," a specific example of the hardware configuration capable of realizing each of the devices that constitute the system will be described. Finally, the effect of the embodiment will be described in section "1.5."

### (1.1. Outline)

### (1.1.1. System Outline)

FIG. 1 is a diagram illustrating the functional configuration of an advertisement distribution system 1 including an information processing system according to the embodiment. As illustrated in FIG. 1, the advertisement distribution system 1 according to the embodiment includes an advertising medium distribution server 100, an advertisement network server 200, and an advertisement bidding device 300. Here, it is assumed that the advertising medium distribution server 100, the advertisement network server 200, the advertisement bidding device 300, and a client terminal 400 are mutually communicable through the Internet N.

The advertising medium distribution server 100 is a server for providing, to the client terminal 400, websites on which advertising display slots for displaying advertisements are set. As the websites provided by the advertising medium distribution server 100, for example, there can be considered various sites, such as a website for providing a search service, a site for providing a blog browsing/editing service, and a website for distributing news. In the example of FIG. 1, the advertising medium distribution server 100 includes a website providing unit 110 and an advertisement auction unit 120. Here, the advertisement auction unit 120 performs an advertisement auction process for making a final determination on an advertisement to be displayed in an advertising display slot on a website provided by the website providing unit 110.

In response to a request from a program included in page information on the website provided by the advertising medium distribution server 100, the advertisement network server 200 performs an auction process to determine an advertisement to be displayed in an advertising display slot on the website. In the example of FIG. 1, the advertisement network server 200 includes an SSP (Supply Side Platform) unit 210, an advertisement auction unit 220, and a DSP (Demand Side Platform) unit 230. Here, the SSP unit 210 provides a mechanism for determining an advertisement to be displayed in an advertising display slot on a website provided by the advertising medium distribution server 100. Further, the advertisement auction unit 220 auctions off an advertising display slot of which a notification is received through the SSP unit 210. Based on predetermined advertisement bidding conditions, the DSP unit 230 provides, to advertisers, a mechanism for allowing the advertisers to bid for the advertising display slot auctioned by the advertisement auction unit 220.

The advertisement bidding device 300 has the function of determining whether to bid for the advertising display slot to be displayed on the client terminal 400. In the example of FIG. 1, the advertisement bidding device 300 includes a bidding determination unit 310 and a database (DB) 311. Based on an advertisement bidding condition 312 stored in the DB 311, the advertisement bidding device 300 determines under what bidding condition a bid for an advertising display slot of which a notification is received from the SSP unit 210 is to be made.

### (1.1.2. Outline of Processing Flow of System)

An outline of a processing flow of the system will be described in brief.

The client terminal 400 can use a browser 411 to browse a website provided by the website providing unit 110 of the advertising medium distribution server 100.

When a site of the advertising medium distribution server 100 is browsed on the client terminal 400, page information created by the website providing unit 110 is downloaded to the browser 411. The page information is described, for example, in HTML (HypeText Markup Language), and a program (which is also called an advertising tag below) described, for example, in JavaScript (registered trademark) is contained therein. Based on the function of the advertising tag set for an advertising display slot, the browser 411 notifies the SSP (Supply Side Platform) unit 210 of the advertisement network server 200 of the presence of the advertising display slot. Various pieces of information such as the size of the advertising display slot are contained in this notification of the advertising display slot. Further, if two or more advertising display slots exist on one page, information on each of the advertising display slots will be contained in the notification of the advertising display slots, respectively. Although only the SSP unit 210 of the advertisement network server 200 is described in the figure, the present invention is not limited thereto. The tags of the website provided by the advertising medium distribution server 100 may notify multiple SSPs including the SSP unit 210 of the presence of the advertising display slot.

When receiving access from the client terminal 400 according to the advertising display slot, the SSP unit 210 of the advertisement network server 200 checks a cookie's domain set in the browser 411 of the client terminal 400. As will be described later, it is possible for the SSP unit 210 to check the domain of a DSP cookie 421 set in the browser 411.

Since the SSP unit 210 of the advertisement network server 200 manages a domain list (a domain list 217 to be described later) of respective advertisers who can bid for an advertising display slot notified by the SSP unit 210, the domain list 217 is checked against the cookie's domain set in the browser 411 of the client terminal 400. As a result, when a cookie having the domain of an advertiser is set in the browser 411 of the client terminal 400, the SSP unit 210 adds, to the browser 411 of the client terminal 400, information indicating that the cookie having the domain of the advertiser is stored, and notifies the advertisement bidding device 300 that the advertising display slot is being auctioned. The advertisement bidding device 300 refers to the advertisement bidding condition 312 using information on the domain and information indicating to what website the advertising display slot belongs to make a bid to the advertisement auction unit 220 of the advertisement network server 200.

At this time, when cookies having the domains of two or more advertisers are set in the browser 411 of the client terminal 400, the advertisement bidding device 300 that manages bids from respective advertisers is notified that the advertising display slot is being auctioned.

Here, the SSP unit 210 notifies the advertisement bidding device 300 of information on whether the cookie of the advertiser is set in the browser 411 of the client terminal 400, but the present invention is not limited thereto. The SSP unit 210 may notify the advertisement bidding device 300 of information on the domains of all cookies contained on the client terminal 400.

The SSP unit 210 also notifies the DSP unit 230 that the advertising display slot on the client terminal 400 is being auctioned.

When receiving the notification from the SSP unit 210, the DSP unit 230 determines under which condition a bid for the advertising display slot is to be made based on user browsing history information collected based on the function of the DSP cookie 421 issued by the DSP unit 230 in advance, and notifies the advertisement auction unit 220 of the result (i.e., making a bidding request). Here, the cookie issued by the DSP unit 230 is issued from the domain of the advertising medium distribution server 100. This point will be described in detail later.

When receiving the notification of the advertising display slot from the SSP unit 210, the advertisement auction unit 220 of the advertisement network server 200 starts the advertisement auction for the advertising display slot. Then, when bidding requests are made from DSP units 230 or advertisement bidding devices 300, the advertisement auction unit 220 accepts a proper bidding request (e.g., the highest bid price) among the bidding requests. Note that it is not the final acceptance at this moment, and the advertisement bidding condition on the accepted advertisement is notified to the SSP unit 210. Based on the accepted bid result, the SSP unit 210 makes a bid to the advertisement auction unit 120 contained in the advertising medium distribution server 100. The advertisement auction unit 120 uses the bid made from the SSP unit 210 and bids from other unillustrated SSPs to held a final auction for the advertising display slot. As a result, for example, the advertisement auction unit 120 finally determines an advertisement with the highest bid price offered as an advertisement bidding condition to be the advertisement displayed in the advertising display slot. If the advertisement bid notified from the SSP unit 210 is accepted, the SSP unit 210 will notify the accepted bid result including the address information (URL) of an advertising source of the advertisement (for example, including an image and the like to be displayed) to an advertising tag processed by the browser 411 of the client terminal 400.

Based on the accepted bid result, the client terminal 400 reads the advertising source of an advertiser whose bid for the advertising display slot is accepted. Thus, an advertisement image included in the advertising source is displayed on the browser 411 of the client terminal 400.

Such an implementation makes it possible to distribute an advertisement according to a user attribute(s) using a cookie (first-party cookie) set in the domain of the advertising medium distribution server 100 without using a cookie (third-party cookie) in the domain of the advertisement network server 200 managed by an advertisement distributer. In other words, advertisement distribution according to a browsing history (so-called behavioral targeting advertising) to even the browser 411 set to reject third-party cookies is made possible.

Thus, the advertisement distribution system 1 can distribute advertisements properly.

### (1.2. Functional Configuration of System)

Then, the functional configuration of each of the devices that constitute the advertisement distribution system 1 will be described with reference to FIG. 1 in detail.

### (1.2.1. Advertising Medium Distribution Server 100)

Next, the advertising medium distribution server 100 will be described. The advertising medium distribution server 100 is a server for providing, to the client terminal 400 on the Internet N, websites on which advertising display slots for displaying advertisements are set. As the websites provided by the advertising medium distribution server 100, for example, there can be considered various sites, such as a website for providing a search service, a site for providing a blog browsing/editing service, and a website for distributing news.

The advertising medium distribution server 100 includes the website providing unit 110 and the advertisement auction unit 120. The website providing unit 110 provides a website distribution service to the client terminal 400 on the Internet N. At this time, an advertisement is displayed on the browser 411 of a user who has displayed a web page provided by the advertising medium distribution server 100. In other words, there is an advertising display slot on the web page provided by the advertising medium distribution server 100.

The website providing unit 110 transmits, to the client terminal 400 that has accessed, page information according to the address (URL). The web page information is described, for example, in HTML, and an advertising tag described in JavaScript (registered trademark) or the like is contained therein. The advertising tag is to display an advertisement in the advertising display slot mentioned above. More specifically, the advertising tag is to notify the SSP unit 210 of the advertisement network server 200 that the advertising display slot is present, and requests the DSP unit 230 to transmit a program (JavaScript (registered trademark)) for setting a DSP cookie 421 in the browser 411.

The browser 411 of the client terminal 400 displays the web page information read from the website providing unit 110. In this case, the browser 411 accesses the SSP unit 210 of the advertisement network server 200 and the DSP unit 230 based on the control of the advertising tag.

The advertisement auction unit 120 receives bids for the advertising display slot from one or more SSPs including the SSP unit 210 of the advertisement network server 200 to auction off the advertising display slot. To be more specific, for example, the advertisement auction unit 120 determines an advertisement with the highest bit price offered among the bids from the respective SSPs including the SSP unit 210 to be the advertisement displayed in the advertising display slot. When the bid of the SSP unit 210 is accepted, the advertisement auction unit 120 notifies the SSP unit 210 of that effect.

### (1.2.2. Advertisement Network Server 200)

The advertisement network server 200 performs a bid process for determining an advertisement to be displayed in an advertising display slot on a website in response to a request from a program contained in page information on the website provided by the advertising medium distribution server 100. As illustrated in FIG. 1, the advertisement network server 200 roughly includes the SSP unit 210, the advertisement auction unit 220, and the DSP unit 230.

### (1.2.2.1. SSP Unit 210)

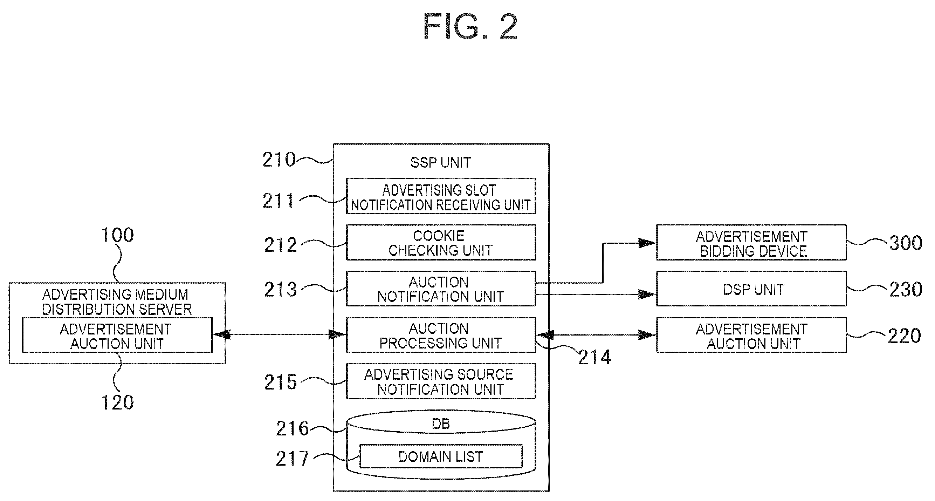

Referring to FIG. 2, the SSP unit 210 will be described below. The SSP unit 210 provides an SSP function to a website distributed by the advertising medium distribution server 100 to display an advertisement. The SSP unit 210 according to the embodiment includes an advertising slot notification receiving unit 211, a cookie checking unit 212, an auction notification unit 213, an auction processing unit 214, an advertising source notification unit 215, and a database (DB) 216.

The advertising slot notification receiving unit 211 receives a notification that an advertising display slot is present from the browser 411 of the client terminal 400 operating according to an advertising tag. At this time, if there are two or more advertising display slots, the notification from the client terminal 400 will contain information on that effect, the size of each advertising display slot, and information such as an identifier or the like.

The cookie checking unit 212 checks what domain of a cookie is set in the browser 411 of the client terminal 400 from which the notification of the presence of the advertising display slot is sent. The cookie checking unit 212 also checks whether the cookie's domain set in the browser 411 is contained in a domain list 217 of the DB 216. Here, the domain list 217 is a domain list of respective advertisers capable of bidding for the advertising display slot notified by the SSP unit 210.

The auction notification unit 213 notifies the DSP unit 230 and the advertisement bidding device 300 that the advertising display slot on the client terminal 400 is being auctioned. Here, for example, the auction notification unit 213 sends, to an API (Application Programming Interface) provided by the advertisement bidding device 300, the notification that the advertising display slot is being auctioned to the advertisement bidding device 300.

In response to the notification from the client terminal 400 that the advertising display slot is present, the auction processing unit 214 requests the advertisement auction unit 220 to auction off the advertising display slot on the client terminal 400. Further, when receiving the result of the advertisement auction (information on an advertisement bidding condition on the accepted advertisement or the like) from the advertisement auction unit 220, the auction processing unit 214 uses the advertisement bidding condition to bid for the advertisement auction held by the advertisement auction unit 120 of the advertising medium distribution server 100.

When an advertisement under the advertisement bidding condition for which the auction processing unit 214 sent the bid to the advertisement auction unit 120 of the advertising medium distribution server 100 is an accepted bid for the advertising display slot, the advertising source notification unit 215 notifies the client terminal 400 of information such as location information (URL) for acquiring an advertising source of the accepted advertisement.

The DB 216 manages the domain list 217. The domain list 217 is a domain list of respective advertisers capable of bidding for the advertising display slot notified by the SSP unit 210 as mentioned above.

### (1.2.2.2. Advertisement Auction Unit 220)

In response to a request from the auction processing unit 214 of the SSP unit 210, the advertisement auction unit 220 makes an advertisement bid for an advertising display slot on the client terminal 400. After that, the advertisement auction unit 220 accepts an advertisement for the advertising display slot, where the advertisement is related to a bid that offers, for example, the highest price as an advertisement bidding condition among bids from DSP units 230 or advertisement bidding devices 300 received during a given period of time. The advertisement auction unit 220 notifies the auction processing unit 214 of the SSP unit 210 of the accepted bid result.

### (1.2.2.3. DSP Unit 230)

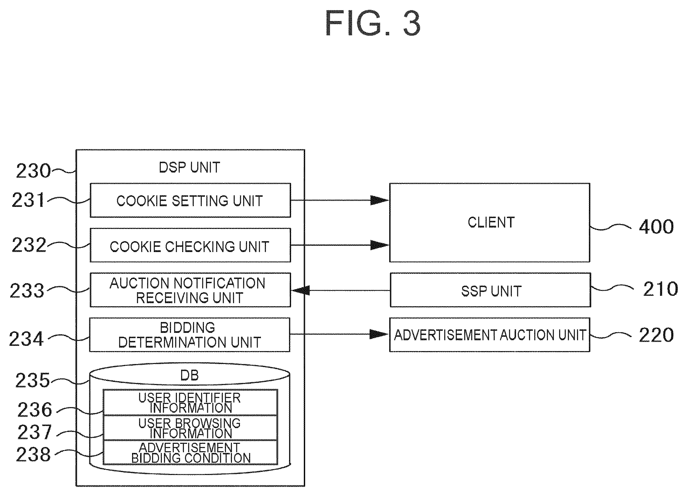

Referring to FIG. 3, the DSP unit 230 will be described below. The DSP unit 230 provides, to advertisements, a mechanism for making advertisement bids for an advertising display slot being auctioned by the advertisement auction unit 220 based on a predetermined advertisement bidding condition 238. The DSP unit 230 according to the embodiment includes a cookie setting unit 231, a cookie checking unit 232, an auction notification receiving unit 233, a bidding determination unit 234, and a database 235.

The cookie setting unit 231 transmits a program (e.g., described in JavaScript (registered trademark)) for setting the DSP cookie 421 on the client terminal 400 to the client terminal 400 having accessed the DSP unit 230 based on an advertising tag contained in page information on a website provided by the advertising medium distribution server 100. The browser 411 of the client terminal 400 that received the program checks whether the DSP cookie 421 in the domain of the advertising medium distribution server 100 is set in the browser 411, and if the DSP cookie 421 is not set, the DSP cookie 421 will be set in the browser 411. As mentioned above, the DSP cookie 421 is issued from the domain of the advertising medium distribution server 100. At this time, since the domain matches the domain of the website of the advertising medium distribution server 100 being accessed by a user using the browser 411, the cookie is s first-party cookie. In other words, even if the browser 411 of the client terminal 400 rejects third-party cookies, it is possible to set the DSP cookie 421.

Here, the DSP cookie 421 contains, as a value, information on a user identifier for identifying the user. Further, the DSP cookie 421 has the function of collecting browsing information on web pages browsed by the user and notifying the browsing information to the DSP unit 230.

The cookie checking unit 232 checks the content of the DSP cookie 421. Here, any other server different in domain can check only the cookie's domain and generally cannot check the content of the cookie set in the browser 411.

However, the DSP unit 230 has a function to transmit a program such as JavaScript (registered trademark) to the client terminal 400 accessing the DSP unit 230 based on the advertising tag (JavaScript (registered trademark) or the like) contained in the page information on the website provided by the advertising medium distribution server 100. In other words, the DSP unit 230 functions as part of the website provided by the advertising medium distribution server 100. This enables the DSP unit 230 to check the content of the DSP cookie 421 having the domain of the advertising medium distribution server 100 while the browser 411 is accessing the website. Thus, the cookie checking unit 232 of the DSP unit 230 can refer to the content of the DSP cookie 421 set in the browser 411 to acquire the user identifier and browsing information. The browsing information acquired by the cookie checking unit 232 is stored in the DB 235 as user browsing information 237 to be described later in association with the user identifier.

The auction notification receiving unit 233 receives, from the auction notification unit 213 of the SSP unit 210, a notification that an advertising display slot is being auctioned in the advertisement auction unit 220.

The bidding determination unit 234 determines under which condition a bid is to be made for the advertising display slot of which the notification is received at the auction notification receiving unit 233. At this time, the bidding determination unit 234 refers to the user browsing information 237 associated with the user identifier acquired by the cookie checking unit 232 with reference to the DSP cookie 421, and the advertisement bidding condition 238 to determine whether to make a bid. Here, the category of web pages the user is browsing is contained in the user browsing information 237. The category of web pages can be identified, for example, by extracting keywords from text data contained in each web page and estimating in what category a keyword estimated to be important is. This enables the bidding determination unit 234 to bid for the advertising display slot using the advertisement bidding condition 238 in which, for example, such a condition as to "offer ○× yen for users who have ever visited music-related sites" or the like.

The DB 235 manages user identifier information 236, the user browsing information 237, and the advertisement bidding condition 238.

The user identifier information 236 is information on the user identifier set in the DSP cookie 421 set by the cookie setting unit 231 in the browser 411 of the client terminal 400 and the content of which is checked by the cookie checking unit 232. When the DSP cookie 421 is set on many client terminals 400, information on all user identifiers is stored in the user identifier information 236.

The user browsing information 237 is information in which a browsing history of the client terminal 400 acquired by the cookie checking unit 232 from the client terminal 400 is managed in association with the user identifier information 236. Here, information on the category of each website browsed by the user or the like is also contained in the user browsing information 237 as mentioned above.

The advertisement bidding condition 238 is used to determine a condition to bid for the advertising display slot. More specifically, information is contained, such as the category of sites every visited by users toward which an advertisement bid is to be made and the amount of money to offer for the bid.

### (1.2.3. Advertisement Bidding Device 300)

The advertisement bidding device 300 has a function to determine whether to make an advertisement bid for an advertising display slot to be displayed on the client terminal 400 based on the DSP cookie 421 set on the client terminal 400. At this time, the advertisement bidding device 300 refers to the advertisement bidding condition 312. Particularly, in the embodiment, the SSP unit 210 of the advertisement network server 200 notifies the advertisement bidding device 300 that the advertising display slot related to the client terminal 400 is being auctioned together with cookie's domain information set in the browser 411 of the client terminal 400.

Thus, it is considered, for example, that such a condition as to "offer ○× yen for the advertising display slot related to the client terminal 400 having an advertiser's cookie" is set in the advertisement bidding condition 312.

### (1.2.4. Client Terminal 400)

Then, the client terminal 400 will be described with reference to FIG. 1. The client terminal 400 is an information processing device capable of accessing a website provided by the advertising medium distribution server 100. As a specific example of the client terminal 400, a PC (Personal Computer), a mobile-phone unit (it is not matter of a so-called feature phone or a smartphone), or a slate tablet is considered.

The client terminal 400 typically includes a CPU 410, a storage device 420, an input device 430, and a communication interface (I/F) unit 440.

The CPU 410 executes a program stored in the storage device 420 or the like to control various processes on the client terminal 400. The browser 411 capable of browsing a website provided by the advertising medium distribution server 100 runs mainly on the CPU 410.

The storage device 420 is every storage medium such as an HDD (Hard Disk Drive) or a flash memory. The storage device 420 stores various program codes executed by the CPU 410 for the browser 411 or the like, and data necessary upon the execution of the program. Particularly, the DSP cookie 421 set in the browser 411 is stored in the storage device 420.

As mentioned above, the DSP cookie 421 is issued in the domain of the advertising medium distribution server 100 by the DSP unit 230 of the advertisement network server 200. A user identifier for identifying a user is also stored in the DSP cookie 421.

The input device 430 is a device for allowing the user to enter various kinds of information. For example, a pointing device such as a mouse or a touch-pad, a keyboard, or the like corresponds to the input device 430. Various kinds of operations for browsing a website using the browser 411, and the like are all input from the input device 430.

The communication I/F unit 440 is an interface through which the client terminal 400 communicates with various information processing systems, such as the advertising medium distribution server 100 and the advertisement network server 200, via the Internet N.

### (1.3. Flow of Processing)

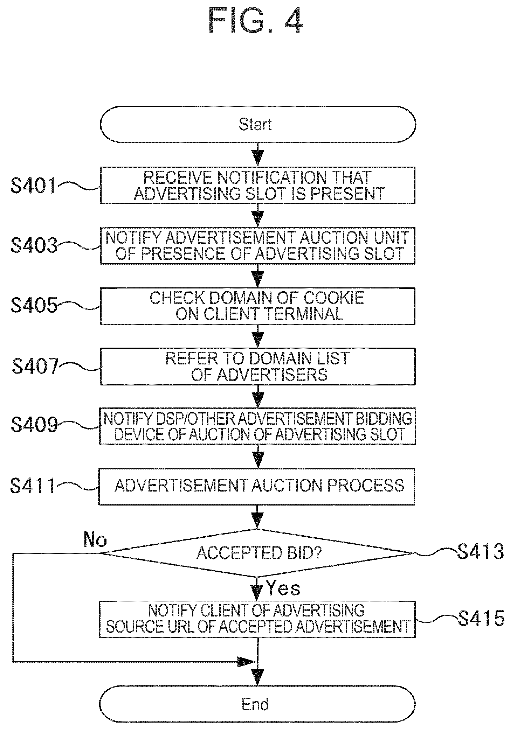

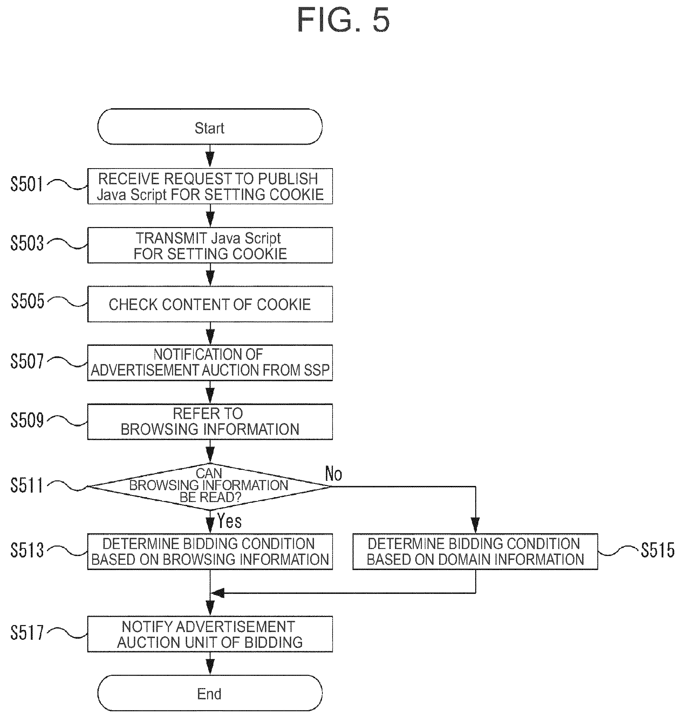

Referring to FIG. 4 and FIG. 5, a flow of processing in the advertisement distribution system 1 according to the embodiment will be described below. Note that respective processing steps to be described below can be executed by changing the order arbitrarily or executed in parallel within such a scope that does not cause any contradiction in the processing content. Any other step may also be added between respective processing steps. Further, a step described as one step for convenience sake can be divided into two or more steps and executed, or steps described as two or more steps for convenience sake can be executed as one step.

### (1.3.1. Flow of Processing of SSP Unit 210)

First, a flow of processing of the SSP unit 210 of the advertisement network server 200 will be described with reference to FIG. 4. FIG. 4 is a flowchart illustrating a flow of processing of the SSP unit 210 when an advertisement to be displayed in an advertising display slot is determined.

When the browser 411 of the client terminal 400 notifies the SSP unit 210 of the presence of an advertising display slot based on an advertising tag (program) contained in a web page transmitted from the advertising medium distribution server 100 to the client terminal 400, the advertising slot notification receiving unit 211 of the SSP unit 210 receives a notification that the advertising display slot is present (S401). At this time, as will be described later in section "1.3.2" regarding a flow of processing of the DSP unit 230, the DSP unit 230 transmits, to the browser 411, a program for setting the DSP cookie 421 in the browser 411 based on a request from the browser 411 of the client terminal 400 through an advertising tag (program) contained in a web page transmitted to the client terminal 400. In other words, the DSP cookie 421 is set in the browser 411 having accessed the advertising medium distribution server 100 unless the browser 411 rejects the cookie.

When the notification that the advertising display slot is present is received, the auction processing unit 214 notifies the advertisement auction unit 220 of the presence of the advertising display slot to request the advertisement auction unit 220 to start a bid process (S403). Further, the cookie checking unit 212 checks each cookie's domain set in the browser 411 of the client terminal 400 (S405). At this time, the cookie checking unit 212 refers to the domain list 217 to check whether the cookie's domain set in the browser 411 is contained in the domain list 217 (S407).

On that basis, the auction notification unit 213 notifies the DSP unit 230 and the advertisement bidding device 300 that the advertising display slot is being auctioned (S409). At this time, the auction notification unit 213 may also notify the DSP unit 230 and the advertisement bidding device 300 of information on the cookie's domain set in the browser 411 of the client terminal 400 together.

After that, the auction processing unit 214 performs the auction process between the advertisement auction unit 220 and the advertisement auction unit 120 of the advertising medium distribution server 100 (S411). More specifically, the auction processing unit 214 receives the result of an accepted bid for the advertising display slot from the advertisement auction unit 220 to make a bid to the advertisement auction unit 120 using an advertisement bidding condition related to the accepted bid. As a result, if the bid for the advertising display slot by the auction processing unit 214 can be accepted (Yes in S413), the advertising source notification unit 215 will notify an advertising tag executed by the browser 411 of the client terminal 400 of accepted bid result information containing information on the address or the like of an advertising source set as the advertisement bidding condition on the accepted bid (S415).

### (1.3.2. Flow of Processing of DSP Unit 230)

Next, a flow of processing of the DSP unit 230 also contained in the advertisement network server 200 will be described with reference to FIG. 5. FIG. 5 is a flowchart illustrating a flow of processing of the DSP unit 230 when a bidding process is performed at an auction for an advertising display slot.

When the client terminal 400 accesses a website of the advertising medium distribution server 100, the browser 411 of the client terminal 400 transmits a request to the DSP unit 230 to issue program code (described in JavaScript (registered trademark)) based on an advertising tag (program) contained in page information on the website. When receiving the request (S501), the DSP unit 230 transmits program code for setting the DSP cookie 421 in the browser 411 (S503). When the program code is executed by the browser 411, it is checked whether the DSP cookie 421 is set in the browser 411. If the DSP cookie 421 is not set in the browser 411, the DSP cookie 421 will be set in the browser 411.

Since the DSP cookie 421 is set by the program code executed as part of the web page of the advertising medium distribution server 100, the DSP cookie 421 has the domain of the advertising medium distribution server 100, rather than the domain of the advertisement network server 200. In other words, the DSP cookie 421 is set in the browser 411 as a first-party cookie.

Further, identifier information for identifying a user is contained in the DSP cookie 421 as a value. The DSP cookie 421 also has a function to notify the DSP unit 230 of information on browsing by the browser 411 within the website of the advertising medium distribution server 100. The cookie checking unit 232 stores the browsing information acquired using the DSP cookie 421 as user browsing information 237 in association with the user identifier as needed.

After the program code is transmitted by the cookie setting unit 231, the cookie checking unit 232 checks the content of the DSP cookie 421 set in the browser 411 (S505). Thus, it is possible to know that the DSP cookie 421 is set in the browser 411 and information on the user identifier or the like for identifying the user.

After that, when the auction notification receiving unit 233 receives, form the SSP unit 210, a notification that the auction for the advertising display slot is started (S507), the user identifier is used to refer to the user browsing information 237 (S509). As a result, when the user browsing information 237 can be read (Yes in S511), the advertisement bidding condition 238 is referred to based on the user browsing information 237 to determine under which condition a bid is to be made for the advertising display slot (S513).

When the user browsing information 237 cannot be read (No in S511), the bidding determination unit 234 may refer to the advertisement bidding condition 238 using the category of the website identifiable based on domain information on the website related to the advertising display slot to make a bid (S515). The category of the website can be determined, for example, by extracting keywords in advance from text data contained in the page information and analyzing the keywords.

After that, the bidding determination unit 234 uses the advertisement bidding condition 238 determined in step S513 or S515 to make a bid to the advertisement auction unit 220 (S517). Here, when the advertisement bidding condition 238 contains conditions related to multiple advertisers, the bidding determination unit 234 may use the advertisement bidding condition 238 for each of the advertisers to make a bid (i.e., to make bids for one advertising display slot under multiple advertisement bidding conditions 238).

### (1.4. Hardware Configuration)

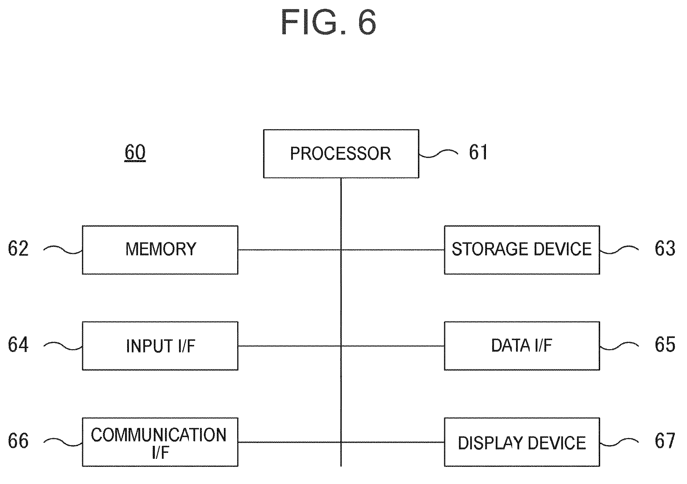

Referring to FIG. 6, an example of a hardware configuration when the advertising medium distribution server 100, the advertisement network server 200, and the advertisement bidding device 300 mentioned above are implemented by a computer 60 will be described below. Note that the function of each device can also be implemented by dividing the function into two or more devices.

As illustrated in FIG. 6, the computer 60 includes a processor 61, a memory 62, a storage device 63, an input interface (I/F) 64, a data I/F 65, a communication I/F 66, and a display device 67.

The processor 61 executes a program stored in the memory 62 to control various processes on the computer 60. For example, the website providing unit 110 and the advertisement auction unit 120 of the advertising medium distribution server 100, the SSP unit 210, the advertisement auction unit 220, and the DSP unit 230 of the advertisement network server 200, and the bidding determination unit 310 of the advertisement bidding device 300 can be implemented as a program temporarily stored in the memory 62 to run mainly on the processor 61.

The memory 62 is a storage medium such as a RAM (Random Access Memory). The memory 62 temporarily stores program code of the program executed by the processor 61, and data necessary upon the execution of the program. For example, the DB 216 or the DB 235 included in the advertisement network server 200, and the DB 311 of the advertisement bidding device 300 can be temporarily stored in the memory 62.

The storage device 63 is a nonvolatile storage medium such as a hard disk or a flash memory. The storage device 63 stores an operating system and various programs for implementing each of the above configurations. In addition thereto, the storage device 63 can also store the DB 216 or the DB 235 included in the advertisement network server 200, and the DB 311 of the advertisement bidding device 300. Such programs and data are loaded to the memory 62 as needed and referred to by the processor 61.

The input I/F 64 is a device for accepting input from a user. As a specific example of the input I/F 64, there is a keyboard, a mouse, a touch panel, various sensors, or the like. The input I/F 64 may be connected to the computer 60 through an interface such as USB (Universal Serial Bus).

The data I/F 65 is a device for inputting data from outside of the computer 60. As a specific example of the data I/F 65, there is a drive device for reading data stored in various storage media, or the like. It can be considered that the data I/F 65 is provided outside of the computer 60. In such a case, the data I/F 65 is connected to the computer 60 through an interface such as USB.

The communication I/F 66 is a device for performing data communication with devices outside of the computer 60 through a cable or by radio, for example, via the Internet N. It can be also considered that the communication I/F 66 is provided outside of the computer 60. In such a case, the communication I/F 66 is connected to the computer 60 through an interface such as USB.

The display device 67 is a device for displaying various kinds of information. For example, as a specific example of the display device 67, there is a liquid crystal display or an organic EL (Electro-Luminescence) display, a wearable device to which information is provided through the communication I/F 66 such as a head-mounted display or a smart watch, or the like. The display device 67 may be provided outside of the computer 60. In such a case, the display device 67 is connected to the computer 60 through a display cable or the like.

### (1.5. Effect of Embodiment)

As described above, in the advertisement distribution system 1 of the embodiment, the DSP cookie 421 (first-party cookie) issued in the domain of the advertising medium distribution server 100 is used to enable advertisement distribution based on the browsing history of the user.

Thus, even when the acceptance of third-party cookies is prohibited by the browser 411 of the client terminal 400, an advertisement based on the browsing history of the user can be displayed on the client terminal 400.

### (2. Embodiment 2)

### Embodiment 2 will be described below.

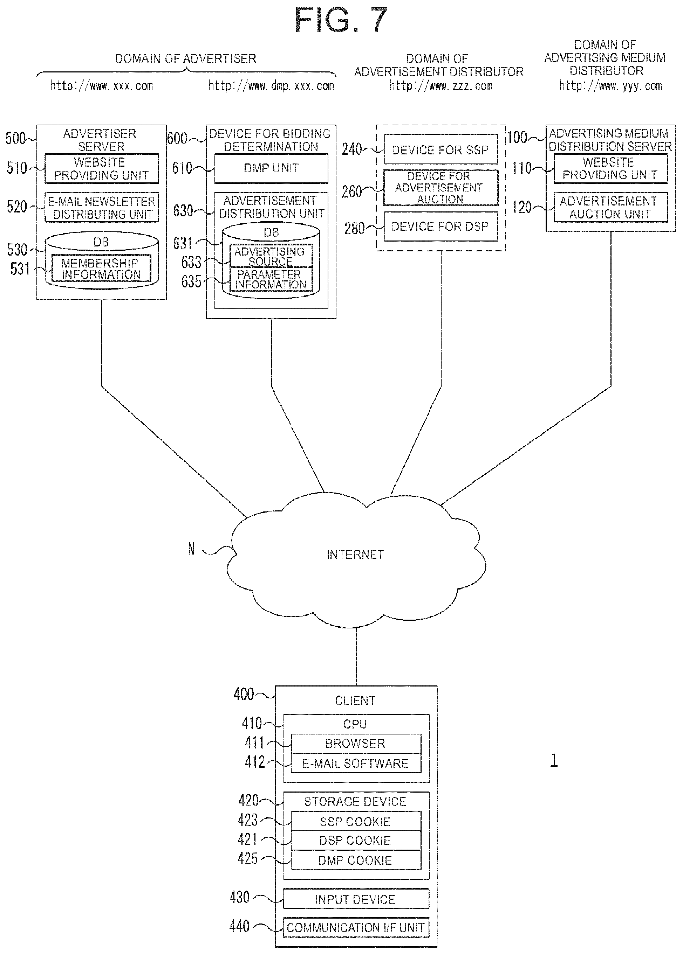

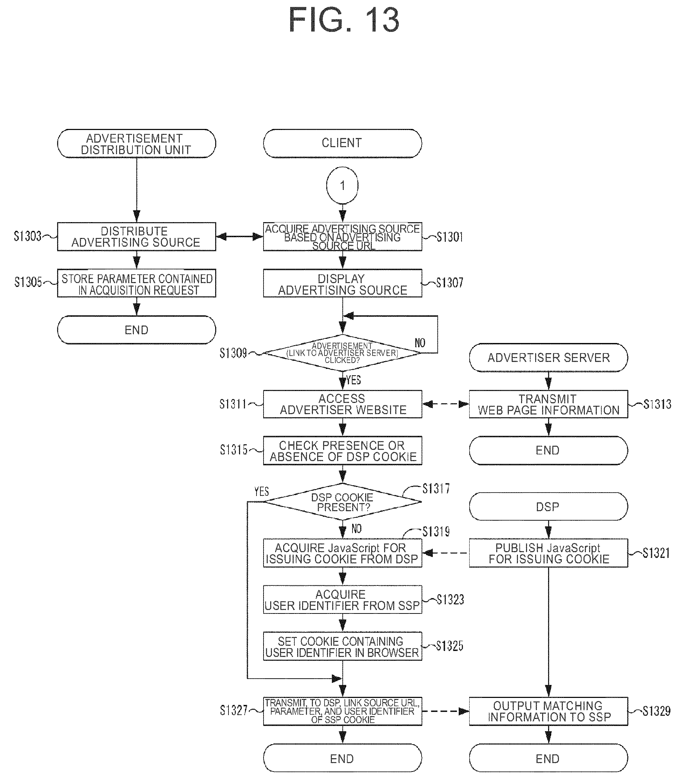

FIG. 7 to FIG. 13 are diagrams/charts for describing Embodiment 2. The embodiment will be described below with reference to these diagrams/charts along the following flow: First, an outline of a system according to the embodiment will be described in section "2.1." Next, the functional configuration of the system will be described in section "2.2." In section "2.3," a flow of processing related to respective devices will be described. In section "2.4," the effect of the embodiment and the like will be described.

In the following description, a configuration having the same function as that in the first embodiment may be given the same reference numeral to omit the description thereof. Further, when the same operational advantage as Embodiment 1 can be obtained, the description may be omitted as well.

Since the hardware configuration capable of implementing each of the devices that constitute the system is the same as the configuration described in section "1.4" of Embodiment 1, the description thereof will be omitted in the embodiment.

### (2.1. Outline)

### (2.1.1. System Outline)

FIG. 7 is a diagram illustrating the functional configuration of an advertisement distribution system 1 including an information processing system according to the embodiment. As illustrated in FIG. 7, the advertisement distribution system 1 according to the embodiment includes an advertising medium distribution server 100, a device 240 for SSP, a device 260 for advertisement auction, a device 280 for DSP, a client terminal 400, an advertiser server 500, and a device 600 for bidding determination. Here, it is assumed that the advertising medium distribution server 100, the device 240 for SSP, the device 260 for advertisement auction, the device 280 for DSP, the client terminal 400, the advertiser server 500, and the device 600 for bidding determination are mutually communicable through the Internet N, respectively. The device 240 for SSP, the device 260 for advertisement auction, and the device 280 for DSP may also be communicable through an unillustrated intranet.

The advertising medium distribution server 100 is a server for providing, to the client terminal 400, websites on which advertising display slots for displaying advertisements are set. As the websites provided by the advertising medium distribution server 100, for example, there can be considered various sites, such as a website for providing a search service, a site for providing a blog browsing/editing service, and a website for distributing news. In the example of FIG. 7, the advertising medium distribution server 100 includes a website providing unit 110 and an advertisement auction unit 120. Here, the advertisement auction unit 120 performs an advertisement auction process for making a final determination on an advertisement to be displayed in an advertising display slot on a website provided by the website providing unit 110. When only an advertisement provided from one predetermined device 240 for SSP is displayed on a website provided by the website providing unit 110 (i.e., when no auction process is required, including a case where advertisements determined by multiple devices 240 for SSP are displayed by rotation), the advertisement auction unit 120 is not required. The same applies to Embodiment 1 in this regard.

The device 240 for SSP has a function similar to the SSP unit 210 in Embodiment 1 to provide a mechanism for determining an advertisement to be displayed in an advertising display slot on a website provided by the advertising medium distribution server 100.

The device 260 for advertisement auction has a function similar to the advertisement auction unit 220 in Embodiment 1 to hold an advertisement auction for an advertising display slot of which a notification is received through the device 240 for SSP.

The device 280 for DSP has a function similar to the DSP unit 230 in Embodiment 1 to provide, to an advertiser, a mechanism for making a bid based on a predetermined advertisement bidding condition at the advertisement auction for the advertising display slot held by the device 260 for advertisement auction. In FIG. 7, only one device 280 for DSP is illustrated, but it is possible to provide multiple devices 280 for DSP. Particularly, multiple devices can be prepared for respective advertisers capable of making bids in the auction process of the advertising display slot performed by one device 240 for SSP and one device 260 for advertisement auction.

The advertiser server 500 is a server managed by each advertiser that distributes an advertisement on the website provided by the advertising medium distribution server 100, such as to provide an advertiser's website or distribute an e-mail newsletter.

The device 600 for bidding determination has a function to determine whether to make a bid for the auction of the advertising display slot to be displayed on the client terminal 400 based on a cookie (DMP cookie 425 to be described later) set in the client terminal 400.

In FIG. 7, only one advertiser server 500 and one device 600 for bidding determination are illustrated, but the present invention is not limited thereto, and it is possible to provide multiple advertiser servers 500 and devices 600 for bidding determination. Particularly, like the device 280 for DSP, it can also be considered that multiple advertiser servers 500 and devices 600 for bidding determination are prepared for respective of the multiple advertisers capable of making bids in the auction process of the advertising display slot performed by one device 240 for SSP and one device 260 for advertisement auction. In this case, the numbers of advertiser servers 500, devices 280 for DSP, and devices 600 for bidding determination do not need to be identical, and each advertiser can make an advertisement bid using at least either the device 280 for DSP or the device 600 for bidding determination.

Here, in the example of FIG. 7, a domain of "http://www.xxx.com" is assigned to the advertiser server 500. Likewise, it is assumed that a domain of "http://www.dmp.xxx.com" is assigned to the device 600 for bidding determination, a domain of "http://www.zzz.com" is assigned to the device 240 for SSP, the device 260 for advertisement auction, and the device 280 for DSP, and a domain of "http://www.yyy.com" is assigned to the advertising medium distribution server 100.

As can be seen from the fact that the advertiser server 500 and the device 600 for bidding determination share the domain of "xxx.com," both are domains managed by the advertiser. It is assumed that the domain of the device 240 for SSP, the device 260 for advertisement auction, and the device 280 for DSP is a domain managed by an advertisement distributor, and the domain of the advertising medium distribution server 100 is a domain managed by an advertising medium distributor. The device 600 for bidding determination does not always have to be managed by the advertiser itself. However, for example, when the device 600 for bidding determination is managed by the advertisement distributer, the domain managed by the advertiser needs to be assigned by the advertiser to the device 600 for bidding determination.

### (2.1.2. Outline of Processing Flow of System)

An outline of a processing flow of the system will be described in brief below.

### (2.1.2.1. Setting of Cookie)

First, processing when a DSP cookie 421, an SSP cookie 423, and a DMP cookie 425 are set will be described.

The client terminal 400 can use the browser 411 to browse a website provided by the website providing unit 110 of the advertising medium distribution server 100 and a website provided by the website providing unit 510 of the advertiser server 500. The client terminal 400 can also use e-mail software 412 to browse an e-mail newsletter distributed by the advertiser server 500.

For example, when a user uses the browser 411 of the client terminal 400 to visit a website provided by the website providing unit 510 of the advertiser server 500, the browser 411 acquires a program published by the DMP unit 610 of the device 600 for bidding determination or the device 280 for DSP based on JavaScript (registered trademark) contained in page information on the website, and the DMP cookie 425 or the DSP cookie 421 is set in the browser 411 based on the function of the program. At this time, for example, when the user logs in to an advertiser's website, if the user can be identified as an individual, the DMP unit 610 will have the DMP cookie 425 set a user identifier for identifying membership. Even when the individual member cannot be identified, a program published by the DMP unit 610 or the device 280 for DSP acquires, from the device 240 for SSP, an identifier for identifying the visited user (note that the identifier cannot be associated with membership information 531 because information as to whether the user is a member or not is unknown), and stores the identifier in the DSP cookie 421 or the DMP cookie 425.

Further, when a link to the advertising medium distribution server 100 is posted on the website provided by the website providing unit 510 of the advertiser server 500, user identifier information for identifying the user is embedded in the link. When the user clicks on the link to access a website provided by the advertising medium distribution server 100, it is found that the user corresponding to the user identifier on the website of the advertiser server 500 has accessed the advertising medium distribution server 100. Thus, when accessing the website of the advertising medium distribution server 100, the browser 411 acquires a program published by the device 240 for SSP based on JavaScript (registered trademark) contained in page information on the website to set the SSP cookie 423 in the browser 411 based on the function of the program. At this time, the device 240 for SSP stores the user identifier in the SSP cookie 423, and stores, as matching information on the same user, the user identifier set in the SSP cookie 423 and the user identifier set in the DSP cookie 421 or the DMP cookie 425 upon visiting the website of the advertiser server 500 as the link source.

Even when the user visits a website related to another advertising medium distributor or a website provided by the advertiser server 500 from the website of the advertising medium distribution server 100, the same processing is repeated to cause the device 240 for SSP to continually update matching information 254 indicating whether the user identifier stored in the cookie set on one website corresponds to a user identifier set on the other website.

In addition, a URL to be connected temporarily to the DMP unit 610 is written in an e-mail newsletter distributed by an e-mail newsletter distributing unit 520 of the advertiser server 500. Since an identifier capable of identifying membership is contained in this URL, the DMP unit 610 can identify the member based on the URL accessed from the client terminal 400. Thus, the DMP unit 610 can store the user identifier for identifying the member in the DMP cookie 425 set in the browser 411 of the client terminal 400.

Note that, when the browser 411 used by the user accesses a website provided by the advertiser server 500, a program of the website sets the DSP cookie 421 or the DMP cookie 425 in the browser 411 based on a program acquired from the device 600 for bidding determination or the device 280 for DSP. Since a program executed as part of page information on the website of the advertiser server 500 sets the cookie in the browser 411, the DSP cookie 421 or the DMP cookie 425 becomes a first-party cookie issued in the domain of the advertiser server 500. In other words, even when the browser 411 of the client terminal 400 rejects third-party cookies, the DSP cookie 421 and the DMP cookie 425 can be set in the browser 411.

Likewise, when the browser 411 used by the user accesses a website provided by the advertising medium distribution server 100, a program of the website sets the SSP cookie 423 in the browser 411 based on a program acquired from the device 240 for SSP. Since a program executed as part of page information on the website of the advertising medium distribution server 100 sets the cookie in the browser 411, the SSP cookie 423 becomes a first-party cookie issued in the domain of the advertising medium distribution server 100. In other words, even when the browser 411 of the client terminal 400 rejects third-party cookies, the SSP cookie 423 can be set in the browser 411.

The contents of the DSP cookie 421, the SSP cookie 423, and the DMP cookie 425 can be checked by the device 280 for DSP, the device 240 for SSP, and the device 600 for bidding determination, respectively.

### (2.1.2.2. Processing in Displaying Advertisement)

After at least some of the DSP cookie 421, the SSP cookie 423, and the DMP cookie 425 are set in the browser 411 of the client terminal 400, when a website provided by the website providing unit 110 of the advertising medium distribution server 100 is accessed, page information on the website is downloaded into the browser 411. The page information is described, for example, in HTML, and a program described, for example, in JavaScript (registered trademark) or the like (the program may also be called the advertising tag below) is contained therein. Based on the function of the advertising tag set for one or more advertising display slots contained in the page information, the browser 411 accesses the device 240 for SSP (where the access can also be regarded as a notification of the presence of an advertising display slot). In the figure, only one device 240 for SSP is illustrated, but the present invention is not limited thereto. The advertising tag on the website provided by the advertising medium distribution server 100 may access multiple SSPs including the device 240 for SSP (i.e., notify them of the presence of the advertising display slot).

When receiving access according to the advertising display slot from the client terminal 400, the device 240 for SSP requests the device 260 for advertisement auction to hold an advertisement auction. Further, the device 240 for SSP checks a user identifier contained in the SSP cookie 423 set on the client terminal 400 to check a user identifier set in the DMP cookie 425 by the device 600 for bidding determination or a user identifier set in the DSP cookie 421 by the device 280 for DSP corresponding to the user identifier. On that basis, a notification that the advertising display slot to be displayed on the client terminal 400 of a user corresponding to the user identifier is being auctioned is sent to the device 280 for DSP or the device 600 for bidding determination together with the user identifier set by the device 280 for DSP or user identifier information set by the device 600 for bidding determination.

The device 280 for DSP or the device 600 for bidding determination makes a bid to the device 260 for advertisement auction using a suitable advertisement bidding condition based on membership information or browsing information managed in association with the user identifier notified.

As a result of the auction process, when the advertisement bidding condition on an advertisement to be displayed in the advertising display slot is determined (accepted), the device 240 for SSP sends the client terminal 400 location information (address information/URL) on an advertising source 633 related to the accepted advertisement bidding condition, and link information in which information on the user identifier and the like is added to the end of a link to the advertiser server 500 and which is embedded in the advertisement. Based on the location information received from the device 240 for SSP, the browser 411 of the client terminal 400 acquires the advertising source 633 from the advertisement distribution unit 630, displays an image or video contained in the advertising source 633 as a banner advertisement, and embeds, in the banner advertisement, the link to the advertiser server 500 including the received user identifier information.

When the user selects the banner advertisement, the browser 411 acquires page information on a website of the advertiser server 500 based on the link, and notifies the device 280 for DSP of a user identifier of the DSP cookie 421 set on the site of the advertiser server 500, and user identifier information set from the device 240 for SSP together with the URL of the website. The device 280 for DSP stores these pieces of information in the DB thereof as matching information, and notifies the device 240 for SSP of the information.

According to such an implementation, correspondences among user identifiers, respectively contained in the DSP cookie 421, the SSP cookie 423, and the DSP cookie 421 set as first-party cookies on the website of the advertiser server 500 and the website of the advertising medium distribution server 100, can be consolidated as matching information of the device 240 for SSP. When starting an advertisement auction process for the advertising display slot, the device 240 for SSP can use the matching information to notify the user identifier managed by the device 280 for DSP or the user identifier managed by the DMP unit 610 of the device 600 for bidding determination to the device 280 for DSP or the DMP unit 610. This allows the DMP unit 610 or the device 280 for DSP to make an advertisement bid based on membership information (in which information on gender, age, residential area, presence or absence of points, buying history, etc. can be contained), a browsing history, and the like managed by each of the devices. In other words, advertisement distribution according to the membership information or the browsing history (so-called behavioral targeting advertising) to even the browser 411 set to reject third-party cookies is made possible. Thus, the advertisement distribution system 1 can distribute an advertisement properly.

### (2.2. Functional Configuration of System)

Then, the functional configuration of each of the devices that constitute the advertisement distribution system 1 will be described with reference to FIG. 7 to FIG. 10.

### (2.2.1. Advertiser Server 500)

First, the advertiser server 500 will be described. As mentioned above, the advertiser server 500 is a server managed by an advertiser to distribute an advertisement onto a website provided by the advertising medium distribution server 100. For example, the advertiser server 500 provides an advertiser's website or distributes an e-mail newsletter. The advertiser server 500 includes a website providing unit 510, an e-mail newsletter distributing unit 520, and a database 530.

In the embodiment, the advertiser server 500 has both the website providing unit 510 and the e-mail newsletter distributing unit 520, but the present invention is not limited thereto. For example, it is considered that the advertiser server 500 does not have the e-mail newsletter distributing unit 520. Further, the function of the advertiser server 500 can be realized by two or more information processing devices.

The website providing unit 510 provides an advertiser's website browsing service to the client terminal 400 on the Internet N. Here, it is assumed that the website provided by the website providing unit 510 is a membership site. Therefore, when a user operating the client terminal 400 logs in to the website provided by the website providing unit 510, the user can be identified.

Tag information (for example, a program described in JavaScript (registered trademark) or the like) for acquiring a program (for example, described in JavaScript (registered trademark) or the like) for issuing the DMP cookie 425 from the DMP unit 610 of the device 600 for bidding determination is contained in page information on the website provided by the website providing unit 510. Therefore, when the user operating the client terminal 400 browses the website provided by the website providing unit 510, the DMP cookie 425 is set in the browser 411 based on the program issued by the DMP unit 610 of the device 600 for bidding determination. Further, as mentioned above, since it is possible to identify the user in response to the user's login (for example, it is possible to associate the user with membership information capable of containing name, gender, address, age, etc.), the DMP unit 610 can manage the user identifier set in the DMP cookie 425 and the membership information in association with each other. Note that the user identifier set in the DMP cookie 425 is uniquely issued by the device 240 for SSP.

Tag information (for example, a program described in JavaScript (registered trademark) or the like) for acquiring a program (for example, described in JavaScript (registered trademark) or the like) for issuing the DSP cookie 421 from the device 280 for DSP is also contained in the page information on the website provided by the website providing unit 510. Therefore, when the user operating the client terminal 400 browses the website provided by the website providing unit 510, the DSP cookie 421 is set in the browser 411 based on the program issued by the device 280 for DSP. Note that the user identifier set in the DSP cookie 421 is uniquely issued by the device 240 for SSP.

Note that the tag information embedded in the page information on the website provided by the website providing unit 510 may acquire both or either of the program for issuing the DMP cookie 425 from the DMP unit 610 of the device 600 for bidding determination and the program for issuing the DSP cookie 421 from the device 280 for DSP.

The e-mail newsletter distributing unit 520 distributes an e-mail newsletter to the e-mail address of each user (each member) registered in the membership information 531. The e-mail newsletter contains various URLs (links) for temporary connection to the DMP unit 610 of the device 600 for bidding determination, and an identifier capable of identifying each user is contained in each of the URLs. Therefore, when the user browses the e-mail newsletter using e-mail software 412 on the client terminal 400 and selects the URL, the browser 411 is activated to acquire the program for issuing the DMP cookie 425 from the DMP unit 610 of the device 600 for bidding determination. As mentioned above, the user identifier issued by the device 240 for SSP is contained in the DMP cookie 425, and further, matching information between the user identifier and an identifier contained in the URL to identify a member is registered in the database managed by the DMP unit 610 or the like.

The database 530 contains membership information 531. The membership information 531 is information on websites provided by the website providing unit 510 or on members who subscribe to the e-mail newsletter distributed by the e-mail newsletter distributing unit 520, in which at least an identifier for identifying each user (member) and attribute information indicative of the attributes of the user are managed in association with each other. For example, the user attribute information can contain information on the user, such as gender and age, residential area (prefecture, city, town or village, and the like), the number of points on the advertiser's website, membership history, purchased merchandise history, and the like.

### (2.2.2. Advertising Medium Distribution Server 100)

Next, the advertising medium distribution server 100 will be described. The advertising medium distribution server 100 is a server for providing, to the client terminal 400 on the Internet N, websites on which advertising display slots for displaying advertisements are set. As the websites provided by the advertising medium distribution server 100, for example, there can be considered various sites, such as a website for providing a search service, a site for providing a blog browsing/editing service, and a website for distributing news.

The advertising medium distribution server 100 includes a website providing unit 110 and an advertisement auction unit 120. The website providing unit 110 provides a website distribution service to the client terminal 400 on the Internet N. At this time, an advertisement is displayed on the user's browser 411 displaying a web page provided by the advertising medium distribution server 100. In other words, there is an advertising display slot on the web page provided by the advertising medium distribution server 100.

The website providing unit 110 transmits page information corresponding to address information (URL) to the accessing client terminal 400. The web page information is described, for example, in HTML, and an advertising tag described in JavaScript (registered trademark) or the like is contained therein. The advertising tag is to display an advertisement in the advertising display slot mentioned above. More specifically, the advertising tag causes the device 240 for SSP to notify the browser 411 that the advertising display slot is present, and acquire a program for setting the SSP cookie 423 from the device 240 for SSP. At this time, even when the client terminal 400 accesses the website of the advertising medium distribution server 100 from a link (address information) posted on a website of the advertiser server 500 or a website of another advertising medium distribution server 100 managed by another advertisement medium distributor, if information related to a user identifier assigned to the DSP cookie 421, the SSP cookie 423, or the DMP cookie 425 on a link source website is embedded in the link, the browser 411 will notify a correspondence relationship between the user identifier assigned by the device 240 for SSP to the SSP cookie 423 and a user identifier assigned on the link source website to the device 240 for SSP under control of the advertising tag.

The advertisement auction unit 120 receives bids for the advertising display slot from one or more SSPs including the device 240 for SSP to auction off the advertising display slot. More specifically, for example, the advertisement auction unit 120 determines a bidding condition that offers, for example, the highest bid price among the bids from the respective SSPs including the device 240 for SSP to be an advertisement displayed in the advertising display slot as the auction target. When the device 240 for SSP wins, the advertisement auction unit 120 notifies the device 240 for SSP of that effect.

### (2.2.3. Device 240 for SSP)

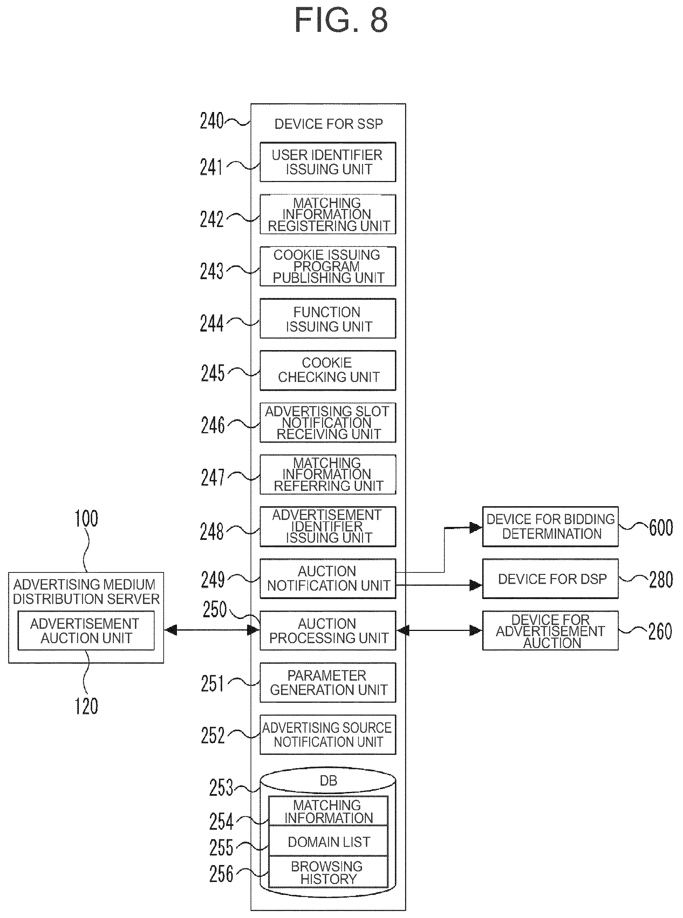

Referring to FIG. 8, the device 240 for SSP will be described below. The device 240 for SSP provides an SSP function for displaying an advertisement on a website distributed by the advertising medium distribution server 100. The device 240 for SSP according to the embodiment includes a user identifier issuing unit 241, a matching information registering unit 242, a cookie issuing program publishing unit 243, a function issuing unit 244, a cookie checking unit 245, an advertising slot notification receiving unit 246, a matching information referring unit 247, an advertisement identifier issuing unit 248, an auction notification unit 249, an auction processing unit 250, a parameter generation unit 251, an advertising source notification unit 252, and a database 253.

Based on a request from the program issued by the device 280 for DSP or the DMP unit 610 of the device 600 for bidding determination, or the device 240 for SSP, the user identifier issuing unit 241 issues a user identifier to be stored in the DSP cookie 421 or the SSP cookie 423, or the DMP cookie 425 set in the browser 411. At this time, the user identifier issuing unit 241 makes the user identifier assigned to each cookie unique. When the device 280 for DSP, the DMP unit 610, and the device 240 for SSP assign user identifiers respectively to the DSP cookie 421, the SSP cookie 423, and the DMP cookie 425, there is also a possibility that an identical user identifier may be assigned to different users, but the user identifier issuing unit 241 of the device 240 for SSP can issue user identifiers in an integrated fashion to avoid such a duplicate. However, the user identifier issuing unit 241 can also assign an identical user identifier to users known to be the same.

Among the user identifiers stored in the DSP cookie 421, the SSP cookie 423, and the DMP cookie 425 respectively issued on a website provided by the advertiser server 500 or a website provided by the advertising medium distribution server 100, the matching information registering unit 242 stores, in the DB 253, matching information 254 indicative of a correspondence relationship of user identifiers assigned to the same user.

As mentioned above, when access is performed from the website provided by the advertiser server 500 to the website of the advertising medium distribution server 100 by following a link, user identifier information assigned to the DSP cookie 421 or the DMP cookie 425 on the website of the advertiser server 500 is contained in the link. Therefore, the program contained in page information on the website of the advertising medium distribution server 100 notifies the matching information registering unit 242 of the device 240 for SSP of the user identifier assigned to the SSP cookie 423 on the website of the advertising medium distribution server 100, the user identifier assigned on the website of the advertiser server 500 as the link source, and URL information on respective websites. In response to the notification, the matching information registering unit 242 updates the matching information 254 contained in the DB 253.

Based on a request from tag information (a program described in JavaScript (registered trademark) or the like) embedded in the page information on the website provided by the advertising medium distribution server 100, the cookie issuing program publishing unit 243 publishes a program (described in JavaScript (registered trademark) or the like) to the browser 411 of the client terminal 400 to issue the SSP cookie 423. Therefore, since the domain set in the SSP cookie 423 is that of the advertising medium distribution server 100, the SSP cookie 423 is treated as a first-party cookie, and hence the SSP cookie 423 can be set in the browser 411 even if the browser 411 rejects third-party cookies. Further, the content of the SSP cookie 423 can be checked by the device 240 for SSP.

When information on a user identifier or the like is contained in a URL, the function issuing unit 244 transmits a callback function to the browser 411 of the client terminal 400 in order not to display, in the browser 411, any description related to the user identifier from the URL.

The cookie checking unit 245 checks what cookie's domain is set in the browser 411 of the client terminal 400 that has notified that an advertising slot is present. At this time, the cookie checking unit 245 checks whether the cookie's domain set in the browser 411 is contained in a domain list 255 managed in the DB 253. Here, the domain list 255 is a domain list of advertisers capable of making bids in the device 280 for DSP or the DMP unit 610 of the device 600 for bidding determination. When the domain of an advertiser capable of making a bid in the device 280 for DSP is contained, the auction notification unit 249 to be described later notifies the device 280 for DSP that the advertisement auction process is being performed, while when the domain of an advertiser capable of making a bid in the DMP unit 610 is contained, the auction notification unit 249 notifies the DMP unit 610 that the advertisement auction is being held.

Further, when the SSP cookie 423 is set, the cookie checking unit 245 reads a user identifier contained in the SSP cookie 423, and information such as a browsing history 256 of the user on the website of the advertising medium distribution server 100 stored in the SSP cookie 423. The cookie checking unit 245 stores the acquired browsing history 256 in the DB 253, and notifies it to the device 280 for DSP.

The advertising slot notification receiving unit 246 receives a notification that an advertising display slot is present from the browser 411 of the client terminal 400 that operates according to the advertising tag. At this time, if there are two or more advertising display slots, the notification from the client terminal 400 will contain information on that effect, and the size of each advertising display slot, the identifier, and the like.

The matching information referring unit 247 refers to the matching information 254 using the user identifier acquired from the SSP cookie 423 as a key to identify to which user the user identifier set in the DSP cookie 421 or the user identifier set in the DMP cookie 425 corresponding to the user identifier belongs.

The advertisement identifier issuing unit 248 assigns an identifier for identifying an advertising display slot to each advertising display slot notified from the client terminal 400. The identifier of the advertising display slot is notified to the device 280 for DSP or the DMP unit 610 of the device 600 for bidding determination together with information such as the user identifier at the time of an advertisement auction. Further, when an accepted advertisement is determined, it is notified to the browser 411 of the client terminal 400 as part of the URL of the accepted advertising source 633 together with information such as the user identifier.

The auction notification unit 249 notifies the device 280 for DSP and the device 600 for bidding determination that an auction for an advertising display slot on the client terminal 400 is being held. Here, if the domain of an advertiser capable of making a bid in the device 280 for DSP is contained in the browser 411 of the client terminal 400, the auction notification unit 249 will notify the device 280 for DSP that an advertisement auction process is being performed, while when the domain of an advertiser capable of making a bid in the DMP unit 610, the auction notification unit 249 notifies the DMP unit 610 that the advertisement auction is being held. Note that the notification to the device 600 for bidding determination or the device 280 for DSP that the advertising display slot is being auctioned is sent, for example, to an API (Application Programming Interface) provided by the device 600 for bidding determination or the device 280 for DSP. In this case, the notification contains information such as the user identifier or the identifier of the advertising display slot. The user identifier notified to the DMP unit 610 or the device 280 for DSP is the user identifier set in the DMP cookie 425 or the user identifier set in the DSP cookie 421 respectively associated with the user identifier contained in the SSP cookie 423 in the matching information referring unit 247.

In response to the notification from the client terminal 400 that the advertising display slot is present, the auction processing unit 250 requests the device 260 for advertisement auction to auction off the advertising display slot on the client terminal 400. Further, when receiving the advertisement bid result (information such as the advertisement bidding condition on an accepted advertisement) from the device 260 for advertisement auction, the auction processing unit 250 uses the advertisement bidding condition to make an advertisement bid for the auction held by the advertisement auction unit 120 of the advertising medium distribution server 100. As a result, when the bid is accepted, the auction processing unit 250 transmits, to the advertising source notification unit 252, information on the accepted advertisement bidding condition, and the advertising source notification unit 252 notifies the client terminal 400 of address information (URL) of the advertising source 633.

As a result of the auction process by the auction processing unit 250, the parameter generation unit 251 generates parameter information to be added to the address information (URL) to acquire the advertising source 633 related to the accepted advertisement. More specifically, it is considered that the parameter generation unit 251 generates a parameter using an identifier assigned to a session between the client terminal 400 and the device 240 for SSP, the user identifier assigned to the user, the identifier assigned to the advertising display slot by the advertisement identifier issuing unit 248, the identifier assigned to the advertising source 633, and the identifier assigned to the advertiser. Here, for example, it is assumed that, when the identifier assigned to the session is denoted by S, the identifier assigned to the user is denoted by A, the identifier assigned to the advertising display slot is denoted by F1, the identifier assigned to the advertising source 633 to be displayed is denoted by B, and the identifier assigned to the advertiser is denoted by C, location information on the advertising source 633 without containing the parameter is "http://dmp.xxx.com/image.png." In this case, it is considered that a value to be notified by the advertising source notification unit 252 to the client terminal 400 as the address information on the advertising source 633 is "http://dmp.xxx.com/image.png?para1=S×A×F1×B&para2=C×A," where the part after "?" corresponds to the parameter generated by the parameter generation unit 251.

As a result of the auction process by the auction processing unit 250, the advertising source notification unit 252 notifies the client terminal 400 of the address information (URL) to acquire the advertising source 633 related to the accepted advertisement. As mentioned above, the address information contains the parameter generated by the parameter generation unit 251 to contain information such as the user identifier.

A link posted to a banner advertisement to access the advertiser server 500 is also contained in the advertising source 633 notified to the client terminal 400 by the advertising source notification unit 252. Here, the advertising source notification unit 252 also adds, to the link, the parameter containing various pieces of information such as the user identifier generated by the parameter generation unit 251. More specifically, "http://www.xxx.com/?para1=S×A×F1×B&para2=C×A" is considered, where the part after "?" corresponds to the parameter generated by the parameter generation unit 251.

The DB 253 manages the matching information 254, the domain list 255, and the browsing history 256. The matching information 254 is information for aggregating user identifiers assigned to the same user. For example, the matching information 254 can contain a correspondence relationship among the user identifiers, the URL of a website to which each user identifier is assigned, and information indicating in which of the DSP cookie 421, the SSP cookie 423, and the DMP cookie 425 the user identifier is stored.

Note that the matching information 254 may also be managed by a dedicated information processing device provided separately from the device 240 for SSP without being managed by the device 240 for SSP.

The domain list 255 can contain a list of the domain of each advertiser capable of making a bid for the advertising display slot notified by the device 240 for SSP and location information (API information) on the device 280 for DSP or the DMP unit 610 used by the advertiser to make a bid.

The browsing history 256 is information on web pages acquired from the SSP cookie 423 as a history of the browser 411 of the client terminal 400 browsing a website provided by the advertising medium distribution server 100.

### (2.2.4. Device 260 for Advertisement Auction)

The device 260 for advertisement auction illustrated in FIG. 7 holds an advertisement auction for an advertising display slot to be displayed in the browser 411 of the client terminal 400 in response to a request from the auction processing unit 250 of the device 240 for SSP. After that, the device 260 for advertisement auction accepts an advertisement related to a bid offering an advertisement bidding condition with the highest bid price, for example, to be accepted for the advertising display slot among bids received from the device 280 for DSP or the DMP unit 610 of the device 600 for bidding determination within a specified period of time. The device 260 for advertisement auction notifies the accepted bid result to the auction processing unit 250 of the device 240 for SSP.

### (2.2.5. Device 280 for DSP)

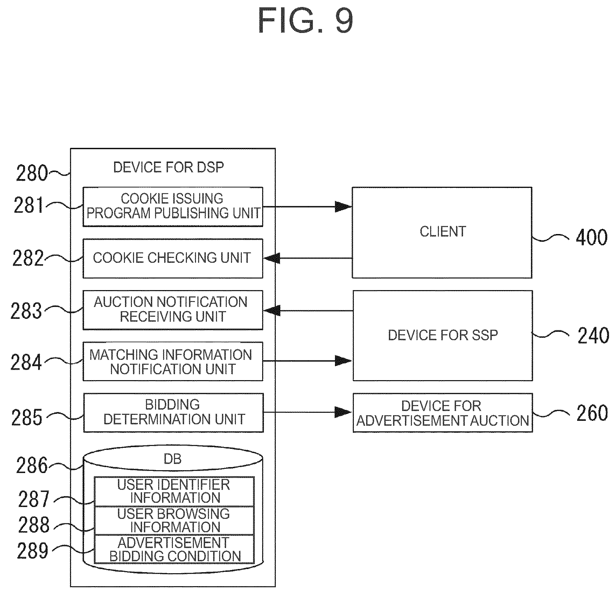

The device 280 for DSP will be described below with reference to FIG. 9. The device 280 for DSP provides, to an advertising display slot, a mechanism for making a bid, based on a predetermined advertisement bidding condition 289, to an advertisement auction for the advertising display slot held by the device 260 for advertisement auction. The device 280 for DSP according to the embodiment includes a cookie issuing program publishing unit 281, a cookie checking unit 282, an auction notification receiving unit 283, a matching information notification unit 284, a bidding determination unit 285, and a DB 286.

Based on a request from tag information (described in JavaScript (registered trademark) or the like) contained in page information on a website provided by the advertiser server 500, the cookie issuing program publishing unit 281 publishes a program (described in JavaScript (registered trademark) or the like) for issuing the DSP cookie 421 to the browser 411 of the client terminal 400. The browser 411 of the client terminal 400 that received the program checks whether the DSP cookie 421 in the domain of the advertiser server 500 is set in the browser 411, and if the DSP cookie 421 is not set, the DSP cookie 421 will be set in the browser 411. As mentioned above, since the DSP cookie 421 is issued in the domain of the advertiser server 500 and matches the domain of the advertiser server 500 being accessed by a user using the browser 411 at this time, the DSP cookie 421 becomes a first-party cookie. In other words, even when the browser 411 of the client terminal 400 rejects third-party cookies, it is possible to set the DSP cookie 421 in the browser 411.

Here, a user identifier for identifying the user who has received the issued cookie from the device 240 for SSP is stored in the DSP cookie 421. The DSP cookie 421 also has a function to collect browsing information on web pages browsed by the user on the website of the advertiser server 500 and notify the browsing information to the device 280 for DSP.

The cookie checking unit 282 checks the content of the DSP cookie 421. Here, any other server different in domain can check only the cookie's domain and generally cannot check the content of the cookie set in the browser 411.

However, the device 280 for DSP has a function to transmit a program, such as JavaScript (registered trademark) or the like provided by the cookie issuing program publishing unit 281, to the client terminal 400 having accessed the device 280 for DSP based on tag information (a program described in JavaScript (registered trademark) or the like) contained in the page information on the website provided by the advertiser server 500. The program functions as part of the page information on the website of the advertiser server 500. This enables the cookie checking unit 282 of the device 280 for DSP to check the content of the DSP cookie 421 having the domain of the advertiser server 500 while the browser 411 is accessing the website. Thus, the cookie checking unit 282 can check the content of the DSP cookie 421 set in the browser 411 to acquire the user identifier and browsing information. The browsing information acquired by the cookie checking unit 282 is stored in the DB 286 as user browsing information 288 in association with the user identifier.

The auction notification receiving unit 283 receives, from the auction notification unit 249 of the device 240 for SSP, a notification that an auction for the advertising display slot is being held in the device 260 for advertisement auction.

The matching information notification unit 284 notifies the device 240 for SSP of matching information indicative of a correspondence relationship of user identifiers assigned to the same user among user identifiers stored in the DSP cookie 421, the SSP cookie 423, and the DMP cookie 425 issued on each of websites provided by the advertising medium distribution server 100 or the advertiser server 500.

When the client terminal 400 accesses the advertiser server 500 by following a link embedded in an advertisement on a website of the advertising medium distribution server 100, user identifier information assigned to the SSP cookie 423 on the website of the advertising medium distribution server 100 is contained in the link. Therefore, the program contained in the page information on the website of the advertiser server 500 notifies the device 280 for DSP of the user identifier assigned to the DSP cookie 421 or the DMP cookie 425 on the website of the advertiser server 500, the user identifier assigned to the SSP cookie 423 on the website of the advertising medium distribution server 100 as the link source, and information on URLs of the respective websites. In response to the notification, the matching information notification unit 284 outputs the matching information to the device 240 for SSP. The matching information registering unit 242 of the device 240 for SSP updates the matching information 254 in the DB 253 using the matching information notified from the matching information notification unit 284 of the device 280 for DSP.

The bidding determination unit 285 examines under which condition a bid is to be made for the advertising display slot for which the notification of the advertisement auction is received at the auction notification receiving unit 283. In this case, the bidding determination unit 285 refers to the user browsing information 288 associated with the user identifier acquired in the notification and the advertisement bidding condition 289 to determine whether to make a bid. Here, the category of web pages the user is browsing is contained in the user browsing information 288. The category of web pages can be identified, for example, by extracting keywords from text data contained in each web page and estimating in what category a keyword estimated to be important is. This enables the bidding determination unit 285 to make a bid for the advertisement auction of the advertising display slot using the advertisement bidding condition 289 in which, for example, such a condition as to "offer ○× yen for users who have ever visited music-related sites" or the like.

The DB 286 manages user identifier information 287, the user browsing information 288, and the advertisement bidding condition 289.

The user identifier information 287 is user identifier information set in the DSP cookie 421, which is set by the cookie issuing program publishing unit 281 in the browser 411 of the client terminal 400 and whose content is checked by the cookie checking unit 282. When the DSP cookie 421 is set on many client terminals 400, all pieces of user identifier information are stored in the user identifier information 287.

The user browsing information 288 manages a browsing history of the browser 411 acquired from the client terminal 400 by the cookie checking unit 282 in association with the user identifier information 287. Here, as mentioned above, information such as the category of each web page browsed by the user is also contained in the user browsing information 288.

In the advertisement bidding condition 289, a condition for making a bid for the advertising display slot is set. More specifically, for example, the category of sites ever visited by users toward which a bid is to be made for the advertising display slot, the amount of money to offer for the bid, address information on the advertising source 633 containing an image to be displayed when the bid is accepted, and the like are contained.

### (2.2.6. Device 600 for Bidding Determination)

The device 600 for bidding determination has a DMP function to determine whether to make a bid for an advertising display slot to be displayed on the client terminal 400 based on the DMP cookie 425 set on the client terminal 400. The device 600 for bidding determination also has a function to transmit an advertising source 633 to the client terminal 400 based on an acquisition request for the advertising source 633 with the address of the advertising source 633 specified after an advertisement to be displayed in the advertising display slot is determined. As illustrated in FIG. 7, the device 600 for bidding determination has a DMP unit 610 and an advertisement distribution unit 630. Note that the DMP unit 610 and the advertisement distribution unit 630 do not always have to be provided on the same device. For example, it can be considered that the advertisement distribution unit 630 is provided in the advertiser server 500 or the device 280 for DSP, or another information processing device, not illustrated.

### (2.2.6.1. DMP Unit 610)

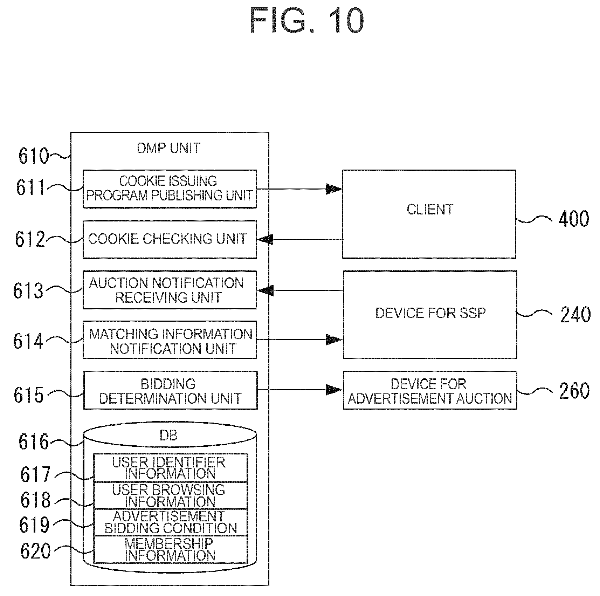

Referring to FIG. 10, the DMP unit 610 will be described below. The DMP unit 610 provides, to an advertising display slot, a mechanism for making a bid, based on a predetermined advertisement bidding condition 619, for an advertisement auction of the advertising display slot held by the device 260 for advertisement auction. The DMP unit 610 according to the embodiment includes a cookie issuing program publishing unit 611, a cookie checking unit 612, an auction notification receiving unit 613, a matching information notification unit 614, a bidding determination unit 615, and a DB 616.

Based on a request from tag information (described in JavaScript (registered trademark) or the like) contained in page information on a website provided by the advertiser server 500, the cookie issuing program publishing unit 611 publishes a program (described in JavaScript (registered trademark) or the like) for issuing the DMP cookie 425 to the browser 411 of the client terminal 400. The browser 411 of the client terminal 400 that received the program checks whether the DMP cookie 425 in the domain of the advertiser server 500 is set in the browser 411, and if the DMP cookie 425 is not set, the DMP cookie 425 will be set in the browser 411. As mentioned above, since the DMP cookie 425 is issued in the domain of the advertiser server 500 and matches the domain of the advertiser server 500 being accessed by a user using the browser 411 at this time, the DMP cookie 425 becomes a first-party cookie. In other words, even when the browser 411 of the client terminal 400 rejects third-party cookies, it is possible to set the DMP cookie 425 in the browser 411.

Here, a user identifier for identifying the user who has received the issued cookie from the device 240 for SSP is stored in the DSP cookie 421. The DMP cookie 425 also has a function to collect browsing information on web pages browsed by the user on the website of the advertiser server 500 and notify the browsing information to the DMP unit 610.

Further, when being accessed by the browser 411 of the client terminal 400 based on an URL contained in an e-mail newsletter published by the advertiser server 500, the cookie issuing program publishing unit 611 sets the DMP cookie 425 in the browser 411 of the client terminal 400. At this time, when it can be identified from a login operation which membership the user has, the matching information notification unit 614 stores, in the DMP cookie 425, user identifier information for identifying the membership, and outputs, to the device 240 for SSP, the user identifier information set to identify the membership and user identifier information issued by the device 240 for SSP in association with each other. The matching information registering unit 242 of the device 240 for SSP registers, in matching information 254, a correspondence relationship of user identifiers notified.

The cookie checking unit 612 checks the content of the DMP cookie 425. Here, any other server different in domain can check only the cookie's domain and generally cannot check the content of the cookie set in the browser 411.

However, the device 600 for bidding determination including the DMP unit 610 has a function to transmit a program, such as JavaScript (registered trademark) or the like provided by the cookie issuing program publishing unit 281, to the client terminal 400 having accessed the device 600 for bidding determination based on tag information (a program described in JavaScript (registered trademark) or the like) contained in page information on a website provided by the advertiser server 500. The program functions as part of the page information on the website of the advertiser server 500. This enables the cookie checking unit 612 of the DMP unit 610 to check the content of the DMP cookie 425 having the domain of the advertiser server 500 while the browser 411 is accessing the website. Thus, the cookie checking unit 612 can check the content of the DMP cookie 425 set in the browser 411 to acquire the user identifier and browsing information. The browsing information acquired by the cookie checking unit 612 is stored in the DB 616 as user browsing information 618 in association with the user identifier.

The auction notification receiving unit 613 receives, from the auction notification unit 249 of the device 240 for SSP, a notification that an auction for the advertising display slot is being held in the device 260 for advertisement auction.

The matching information notification unit 614 notifies the device 240 for SSP of matching information 254 indicative of a correspondence relationship of user identifiers assigned to the same user among user identifiers stored in the DSP cookie 421, the SSP cookie 423, and the DMP cookie 425 issued on each of websites provided by the advertising medium distribution server 100 or the advertiser server 500.

When the client terminal 400 accesses the advertiser server 500 by following a link embedded in an advertisement on a website of the advertising medium distribution server 100, user identifier information assigned to the SSP cookie 423 on the website of the advertising medium distribution server 100 is contained in the link. Therefore, the program contained in the page information on the website of the advertiser server 500 notifies the DMP unit 610 of the user identifier assigned to the DSP cookie 421 or the DMP cookie 425 on the website of the advertiser server 500, the user identifier assigned to the SSP cookie 423 on the website of the advertising medium distribution server 100 as the link source, and information on URLs of the respective websites. In response to the notification, the matching information notification unit 614 outputs the matching information to the device 240 for SSP. The matching information registering unit 242 of the device 240 for SSP updates the matching information 254 in the DB 253 using the matching information notified from the matching information notification unit 614 of the DMP unit 610.

The bidding determination unit 615 examines under which condition a bid is to be made for the advertising display slot for which the notification of the advertisement auction is received at the auction notification receiving unit 613. In this case, the bidding determination unit 615 refers to the user browsing information 618 associated with the user identifier acquired in the notification, membership information 620, and the advertisement bidding condition 619 to determine whether to make a bid. Here, the category of web pages the user is browsing is contained in the user browsing information 618. The category of web pages can be identified, for example, by extracting keywords from text data contained in each web page and estimating in what category a keyword estimated to be important is. This enables the bidding determination unit 615 to make a bid for the advertising display slot using the advertisement bidding condition 619 in which, for example, such a condition as to "offer ○× yen for users who have ever visited music-related sites" or the like.

The membership information 620 has the same content as the membership information 531 managed by the advertiser server 500. The bidding determination unit 615 can refer to the membership information 531 to know various kinds of information such as the gender, age, and residential area of the user for which the advertisement is to be displayed. This enables the bidding determination unit 615 to make a bid for the advertising display slot using the advertisement bidding condition 619 in which, for example, such a condition as to "offer ○× yen for users as men in their thirties" or the like.

The DB 616 manages user identifier information 617, the user browsing information 618, the advertisement bidding condition 619, and the membership information 620.

The user identifier information 617 is set by the cookie issuing program publishing unit 611 in the browser 411 of the client terminal 400, which is user identifier information set in the DMP cookie 425 the content of which is checked by the cookie checking unit 612. When the DMP cookie 425 is set on many client terminals 400, all pieces of user identifier information are stored in the user identifier information 617.

The user browsing information 618 manages a browsing history of the browser 411 acquired from the client terminal 400 by the cookie checking unit 612 in association with the user identifier information 617. Here, as mentioned above, information such as the category of each web page browsed by the user is also contained in the user browsing information 618.

In the advertisement bidding condition 619, a condition for making a bid for the advertising display slot is set. More specifically, for example, the category of web pages ever visited by users toward which a bid is to be made for the advertising display slot, the kind of attribute of users toward which a bid is to be made for the advertising display slot, the amount of money to offer for the bid, address information on the advertising source 633 containing an image to be displayed when the bid is accepted, and the like are contained.

The membership information 620 is information containing at least part of the membership information 531 of the advertiser server 500. In the membership information 620, various kinds of attribute information, such as the gender, residential area, and age of each user, used in publishing a website or an e-mail newsletter are managed in association with the user identifier.

### (2.2.6.2. Advertisement Distribution Unit 630)

The advertisement distribution unit 630 includes a DB 631, and distributes an advertising source 633 contained in the DB 631 to the client terminal 400 having accessed the advertisement distribution unit 630. Multiple advertising sources 633 are contained in the DB 631, and the browser 411 of the client terminal 400 specifies an advertising source 633 using the address information (URL). Here, for example, the advertising source 633 contains an advertisement image, advertisement video, or the like to be displayed on the display of the client terminal 400.

Here, as mentioned above, parameter information, such as a user identifier or an advertiser, added by the device 240 for SSP is added to the address information for specifying the advertising source 633. Based on the parameter information added to the address information, the advertisement distribution unit 630 stores, in the parameter information 635, information indicative of the user identifier related to the client terminal 400 from which the advertising source 633 is transmitted, and indicative of which advertising source 633 is transmitted. Thus, information on the number of times the advertising source 633 is transmitted and for which user the advertising source 633 is transmitted can be checked by referring to the parameter information 635.

### (2.2.7. Client Terminal 400)

Then, the client terminal 400 will be described with reference to FIG. 7. The client terminal 400 is an information processing device capable of accessing a website provided by the advertising medium distribution server 100 or the advertiser server 500. As a specific example of the client terminal 400, for example, a PC (Personal Computer), a mobile-phone unit (it is not matter of a so-called feature phone or a smartphone), or a slate tablet is considered.

The client terminal 400 typically includes a CPU 410, a storage device 420, an input device 430, and a communication interface (I/F) unit 440.

The CPU 410 executes a program stored in the storage device 420 or the like to control various processes on the client terminal 400. The browser 411 capable of browsing a website provided by the advertising medium distribution server 100 or the advertiser server 500 runs mainly on the CPU 410. E-mail software 412 for browsing e-mail transmitted from the advertiser server 500 also runs mainly on the CPU 410.

The storage device 420 is every storage medium such as an HDD (Hard Disk Drive) or a flash memory. The storage device 420 stores various program codes executed by the CPU 410 for the browser 411 or the like, and data necessary upon the execution of the program. Particularly, the DSP cookie 421, the SSP cookie 423, and the DMP cookie 425 set in the browser 411 are stored in the storage device 420.

As mentioned above, the DSP cookie 421 is issued in the domain of the advertiser server 500 by the device 280 for DSP. The user identifier for identifying the user, which is issued from the device 240 for SSP, is stored in the DSP cookie 421.

As mentioned above, the SSP cookie 423 is issued in the domain of the advertising medium distribution server 100 by the device 240 for SSP. The user identifier for identifying the user, which is issued from the device 240 for SSP, is stored in the SSP cookie 423.

As mentioned above, the DMP cookie 425 is issued in the domain of the advertiser server 500 by the DMP unit 610 of the device 600 for bidding determination. The user identifier for identifying the user, which is issued from the device 240 for SSP, is also stored in the DMP cookie 425.

The input device 430 is a device for allowing the user to enter various kinds of information. For example, a pointing device such as a mouse or a touch-pad, a keyboard, or the like corresponds to the input device 430. Various kinds of operations for browsing a website using the browser 411, and the like are all input from the input device 430.

The communication I/F unit 440 is an interface through which the client terminal 400 communicates with various information processing systems, such as the advertising medium distribution server 100 and the advertisement network server 200, via the Internet N.

### (2.3. Flow of Processing)

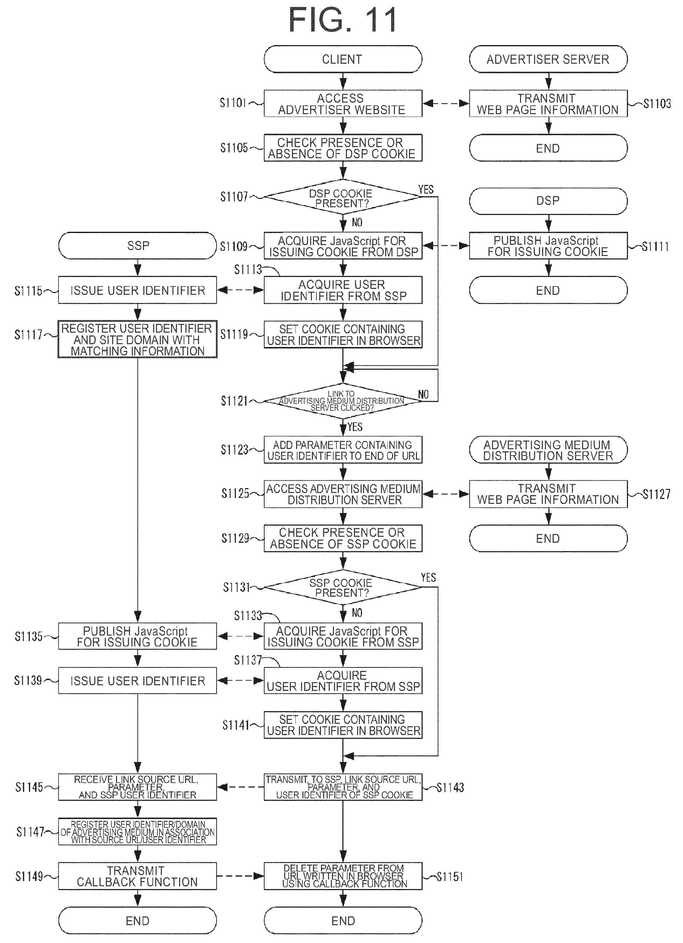

Referring to FIG. 11 to FIG. 13, a flow of processing in the advertisement distribution system 1 according to the embodiment will be described below. Note that respective processing steps to be described below can be executed by changing the order arbitrarily or executed in parallel within such a scope that does not cause any contradiction in the processing content. Any other step may also be added between respective processing steps. Further, a step described as one step for convenience sake can be divided into two or more steps and executed, or steps described as two or more steps for convenience sake can be executed as one step.

### (2.3.1. Flow of Processing Upon Page Transition by Link)

First, a flow of processing when the browser 411 of the client terminal 400 makes a destination transition from a link contained on a website provided by the advertiser server 500 to a website provided by the advertising medium distribution server 100 will be described. FIG. 11 is a flowchart illustrating a flow of processing when the browser 411 of the client terminal 400 changes the destination to a website provided by the advertising medium distribution server 100 based on the link contained in a website after browsing the website provided by the advertiser server 500.

In the following description, the DSP cookie 421 is set in the browser 411 of the client terminal 400 on the website of the advertiser server 500, but the present invention is not limited thereto, and the DMP cookie 425 may be set, or both the DSP cookie 421 and the DMP cookie 425 may be set. In section "2.3.2," description will also be made with a focus on processing using the DSP cookie 421, the present invention is also not limited thereto. The DMP cookie 425 may be used, or both the DSP cookie 421 and the DMP cookie 425 may be used.

In the following, since description will be made with a focus on processing related to a correspondence between user identifiers, the description of processing related to an advertisement display will be omitted. A flow of processing related to the advertisement display upon connection to the website of the advertising medium distribution server 100 will be described in detail in the section "2.3.2."

When the browser 411 of the client terminal 400 accesses the website of the advertiser server 500 (S1101), the website providing unit 510 of the advertiser server 500 transmits, to the client terminal 400, page information described, for example, in HTML or the like (S1103). Tag information as a program described in JavaScript (registered trademark) or the like is contained in the web page information. According to the description of the tag information, the browser 411 first checks whether the DSP cookie 421 is set in the browser 411 (S1105). If the DSP cookie 421 is not set (No in S1107), the browser 411 will acquire a program (described in JavaScript (registered trademark) or the like) for issuing the DSP cookie 421 from the device 280 for DSP (S1109). In response to a request from the browser 411, the cookie issuing program publishing unit 281 of the device 280 for DSP publishes the program for issuing the DSP cookie 421 (S1111).

When the program for issuing the DSP cookie 421 is acquired from the device 280 for DSP, the browser 411 acquires a user identifier from the device 240 for SSP under control of the program (S1113). When the user identifier can be acquired from the device 240 for SSP, the browser 411 sets the DSP cookie 421 containing the acquired user identifier.

When the user identifier issuing unit 241 of the device 240 for SSP issues the user identifier in response to the request from the browser 411 of the client terminal 400 (S1115), the matching information registering unit 242 registers, in the DB 253, the issued user identifier and domain information on the website of the advertiser server 500 as matching information 254 in association with each other (S1117).

After that, when the user selects the link on the website provided by the advertiser server 500 to the website provided by the advertising medium distribution server 100 (Yes in S1121), the browser 411 adds the user identifier information attached to the DSP cookie 421 on the website of the advertiser server 500 to a URL contained in the link to the website provided by the advertising medium distribution server 100 under control of tag information described in JavaScript (registered trademark) or the like (S1123). The user identifier information may be added to the URL when page information is read by the browser 411 (after S1119).

After that, the browser 411 accesses the advertising medium distribution server 100 based on the converted URL (S1125), and the advertising medium distribution server 100 transmits web page information in response to the request (S1127). The tag information as a program described in JavaScript (registered trademark) or the like is contained in the web page information. According to the description of the tag information, the browser 411 first checks whether the SSP cookie 423 is set in the browser 411 (S1129). If the SSP cookie 423 is not set (No in S1131), the browser 411 will acquire a program (described in JavaScript (registered trademark) or the like) for issuing the SSP cookie 423 from the device 240 for SSP (S1133). In response to a request from the browser 411, the cookie issuing program publishing unit 243 of the device 240 for SSP publishes the program for issuing the SSP cookie 423 (S1135).

When acquiring the program for issuing the SSP cookie 423 from the device 240 for SSP, the browser 411 acquires the user identifier from the device 240 for SSP under control of the program (S1137). The user identifier issuing unit 241 of the device 240 for SSP issues the user identifier in response to the request from the browser 411 of the client terminal 400 (S1139). When the user identifier can be acquired from the device 240 for SSP, the browser 411 sets the SSP cookie 423 containing the acquired user identifier (S1141). In the flowchart of FIG. 11, the program for issuing the SSP cookie 423 and the user identifier are transmitted separately from the device 240 for SSP to the browser 411, the present invention is not limited thereto. The user identifier information may be added to the program for issuing the SSP cookie 423.

Further, the browser 411 transmits, to the device 240 for SSP, user identifier information assigned on the website of the advertiser server 500 as the link source and the domain information on the website of the advertiser server 500 added to the URL, and the user identifier stored in the SSP cookie 423 and domain information on the website of the advertising medium distribution server 100 as matching information on user identifiers related to the same user (S1143). According to the received information (S1145), the matching information registering unit 242 of the device 240 for SSP registers, with the matching information 254, the domain of the website of the advertising medium distribution server 100 and the user identifier assigned to the SSP cookie 423 in association with the domain of the website of the advertiser server 500 and the user identifier assigned to the DSP cookie 421 in the domain (S1147). The matching information 254 is thus updated so that user identifier information related to the same user on each website and set in the browser 411 can be managed on the matching information 254.

Further, the function issuing unit 244 of the device 240 for SSP issues a callback function to the client terminal 400 (S1149). When receiving the callback function, the client terminal 400 deletes, based on the function of the callback function, parameter information containing the user identifier information added to the URL in S1123 from the URL of the website of the advertising medium distribution server 100 displayed on the browser (S1151). Thus, the processing related to the correspondence of user identifiers can be performed without making the user aware of the processing related to the user identifiers. However, when this point is not considered, processing related to S1149 and S1151 can be omitted.

In the above processing, the method of establishing a correspondence between user identifiers is described by taking, as an example, the case where the browser 411 makes a destination transition from the website provided by the advertiser server 500 to the website provided by the advertising medium distribution server 100. When the browser 411 makes a destination transition from the website provided by the advertising medium distribution server 100 to a website provided by another advertising medium distribution server 100, it is also possible to establish a correspondence between user identifiers by similar processing (except that the access destination from the website of the advertising medium distribution server 100 as the link source to issue a cookie is the device 240 for SSP, not the device 280 for DSP). The same applies to a case where the browser 411 makes a destination transition from the website provided by the advertiser server 500 to a website provided by another advertiser server 500 (except that the access destination from the website of the advertiser server 500 as the link source to issue a cookie is the device 280 for DSP, not the device 240 for SSP).

### (2.3.2. Flow of Processing Related to Advertisement Display)

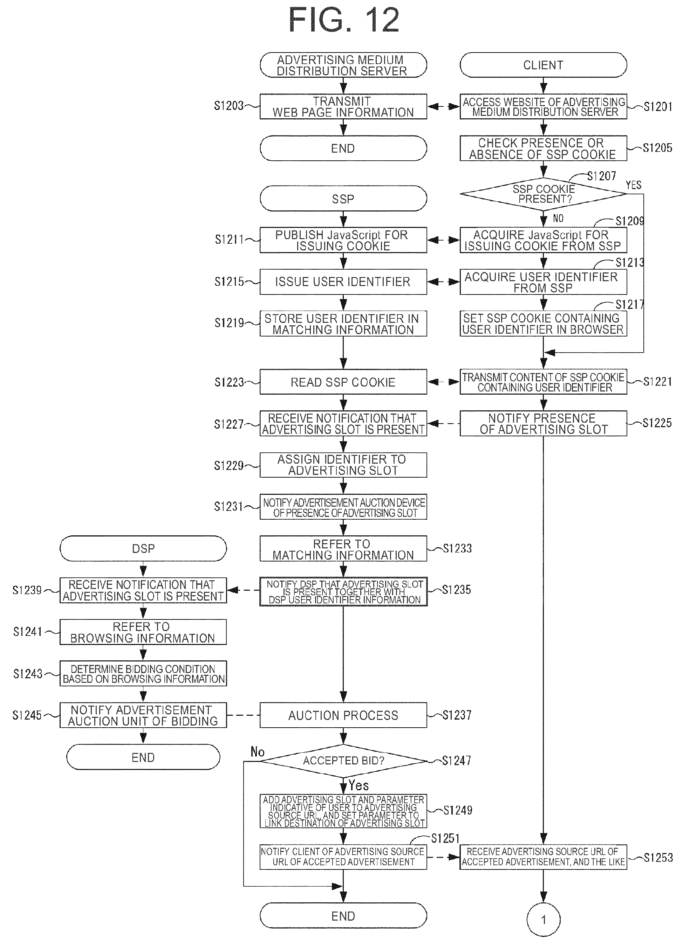

First, a flow of processing when the browser 411 of the client terminal 400 makes a destination transition from a link contained in a website provided by the advertiser server 500 to a website provided by the advertising medium distribution server 100 will be described. FIG. 12 is a flowchart illustrating a flow of processing when the browser 411 of the client terminal 400 changes the destination to a website provided by the advertising medium distribution server 100 based on the link contained in a website after browsing the website provided by the advertiser server 500.

When the browser 411 of the client terminal 400 accesses the website of the advertising medium distribution server 100 (S1201), the website providing unit 110 of the advertising medium distribution server 100 transmits, to the client terminal 400, page information described, for example, in HTML (S1203). Tag information as a program described in JavaScript (registered trademark) or the like is contained in the web page information. According to the description of the tag information, the browser 411 first checks whether the SSP cookie 423 is set in the browser 411 (S1205). As a result, if the SSP cookie 423 is not set (No in S1207), the browser 411 will acquire a program (described in JavaScript (registered trademark) or the like) for issuing the SSP cookie 423 from the device 240 for SSP (S1209). In response to a request from the browser 411, the cookie issuing program publishing unit 243 of the device 240 for SSP publishes the program for issuing the SSP cookie 423 (S1211).

When acquiring the program for issuing the SSP cookie 423 from the device 240 for SSP, the browser 411 acquires a user identifier from the device 240 for SSP under control of the program (S1213). When the user identifier can be acquired from the device 240 for SSP, the browser 411 sets the SSP cookie 423 containing the acquired user identifier (S1217).

When the user identifier issuing unit 241 of the device 240 for SSP issues the user identifier in response to the request from the browser 411 of the client terminal 400 (S1215), the matching information registering unit 242 registers, in the DB 253, the issued user identifier and domain information on the website of the advertising medium distribution server 100 as matching information 254 in association with each other (S1219). Further, the cookie checking unit 245 of the device 240 for SSP reads the content of the SSP cookie 423 from the browser 411 to check if the SSP cookie 423 is stored in the browser 411 correctly (S1223), and the browser 411 transmits information such as a user identifier contained in the SSP cookie 423 in response to the request (S1221).

Further, under control of advertising tag information contained in page information on the website of the advertising medium distribution server 100, the browser 411 notifies the device 240 for SSP that an advertising display slot is present (S1225).

When the advertising slot notification receiving unit 246 receives, from the client terminal 400, the notification that the advertising display slot is present (S1227), the advertisement identifier issuing unit 248 assigns an identifier to the advertising display slot (S1229). Further, the auction processing unit 250 makes a request to the device 260 for advertisement auction for an auction process for the advertising display slot (S1231).

Further, the matching information referring unit 247 of the device 240 for SSP refers to the matching information 254 to check a user identifier assigned to the DSP cookie 421 or the DMP cookie 425 corresponding to the user identifier acquired from the browser 411 in S1221 (S1233). As a result, when the user identifier assigned to the DSP cookie 421 can be acquired, the auction notification unit 249 notifies the device 280 for DSP that an auction for the advertising display slot is being held, together with the user identifier information assigned to the DSP cookie 421 (S1235). Although the description is omitted in FIG. 12, it is possible to send a similar notification to the DMP unit 610 of the device 600 for bidding determination.

When receiving a notification that the advertising slot is present (S1239), the device 280 for DSP refers to user browsing information 288 corresponding to the user identifier contained in the notification (S1241). The user browsing information 288 is information in which a history indicating what web pages have been browsed by the user is managed in association with the user identifier. The bidding determination unit 285 of the device 280 for DSP refers to the user browsing information 288 to see if it matches an advertisement bidding condition 289 (S1243), and when it matches the advertisement bidding condition 289, the advertisement bidding condition 289 is used to notify a bid to the device 260 for advertisement auction (S1245).

The auction processing unit 250 of the device 240 for SSP performs an auction process between the device 260 for advertisement auction and the device 260 for advertisement auction of the advertising medium distribution server 100 (S1237). More specifically, the auction processing unit 250 receives the result of an accepted bid for the advertising display slot from the device 260 for advertisement auction to make a bid to the advertisement auction unit 120 using the advertisement bidding condition on the accepted advertisement. As a result, when the advertisement bidding condition offered by the auction processing unit 250 can be accepted (Yes in S1247), the parameter generation unit 251 adds, as parameters, user identifier information and information on the advertising display slot and the like to URL information on an advertising source 633 contained in the advertisement bidding condition
(S1249), and notifies the URL information on the advertising source 633 to the browser 411 of the client terminal 400 (S1251).

When receiving the URL information on the advertising source 633 (S1253) from the device 240 for SSP, the browser 411 of the client terminal 400 makes a request to the advertisement distribution unit 630 of the device 600 for bidding determination for the advertising source 633 based on the URL information (S1301). In response to the request, the advertisement distribution unit 630 transmits, to the client terminal 400, the advertising source 633 (which can contain image or video, and a program) (S1303), and stores, as parameter information 635 of the DB 631, parameter information (containing information on the user identifier, the advertiser, and the like) contained in the URL information related to the acquisition request for the advertising source 633 (S1305). Based on the received advertising source 633, the browser 411 of the client terminal 400 displays the image or video that forms a banner advertisement (S1307). At this time, a link contained in the advertising source 633 is also set in the banner advertisement. The user identifier information is added to the URL information that forms the link as a parameter by a program contained in the advertisement distribution unit 630 or the advertising source 633.

After that, when the user selects the banner advertisement (Yes in S1309), the browser 411 accesses the website of the advertiser server 500 based on the URL in which information such as the user identifier is added as the parameter (S1311), and the website providing unit 510 of the advertiser server 500 transmits web page information in response to the request (S1313). Tag information as a program described in JavaScript (registered trademark) or the like is contained in the web page information. According to the description of the tag information, the browser 411 first checks whether the DSP cookie 421 is set in the browser 411 (S1315). If the DSP cookie 421 is not set (No in S1317), the browser 411 will acquire a program (described in JavaScript (registered trademark) or the like) for issuing the DSP cookie 421 from the device 280 for DSP (S1319). In response to a request from the browser 411, the device 280 for DSP publishes the program for issuing the DSP cookie 421 (S1321).

When acquiring the program for issuing the DSP cookie 421 from the device 280 for DSP, the browser 411 acquires a user identifier from the device 240 for SSP under control of the program (S1323). The user identifier issuing unit 241 of the device 240 for SSP issues the user identifier in response to a request from the browser 411 of the client terminal 400. When the user identifier can be acquired from the device 240 for SSP, the browser 411 sets the DSP cookie 421 containing the acquired user identifier (S1325).

Further, the browser 411 transmits, to the device 280 for DSP, user identifier information assigned on the website of the advertising medium distribution server 100 as the link source and added to a URL contained in the link of the banner advertisement, and domain information on the website of the advertising medium distribution server 100, and the user identifier stored in the DSP cookie 421 and domain information on the website of the advertiser server 500 as matching information on user identifiers related to the same user (S1327). The matching information notification unit 284 of the device 280 for DSP notifies the notified matching information to the device 240 for SSP (S1329). In response to the matching information, the matching information registering unit 242 of the device 240 for SSP updates the matching information 254 contained in the DB 253.

### (2.4. Effect of Embodiment)

As described above, in the advertisement distribution system 1 of the embodiment, the DSP cookie 421 and the DMP cookie 425 as first-party cookies issued in the domain of the advertiser server 500, and the SSP cookie 423 as a first-party cookie issued in the domain of the advertising medium distribution server 100 are set in the browser 411 of the client terminal 400. Although user identifiers are set in these cookies, respectively, pieces of user identifier information assigned to the same user are continually managed by the device 240 for SSP as matching information 254. This enables the device 280 for DSP or the DMP unit 610 of the device 600 for bidding determination to distribute advertisements based on browsing information or membership information managed by itself. In other words, even when the acceptance of third-party cookies is prohibited by the browser 411 of the client terminal 400, an advertisement based on the browsing history of the user can be displayed on the client terminal 400.

### (3. Supplementary Note)

Note that the above-mentioned configurations of the embodiments may be combined or some components may be replaced. Further, the configuration of the present invention is not limited to the aforementioned embodiments, and various changes may be made without departing from the scope of the invention.

### Reference Numerals

1...advertisement distribution system, 60...computer, 61...processor, 62...memory, 63...storage device 64...input interface, 65...data interface, 66...communication interface, 67...display device, 100...advertising medium distribution server, 110...website providing unit, 120...advertisement auction unit, 200...advertisement network server, 210...SSP unit, 211...advertising slot notification receiving unit, 212...cookie checking unit, 213...auction notification unit, 214...auction processing unit, 215...advertising source notification unit, 216...database, 217...domain list, 220...advertisement auction unit, 230...DSP unit, 231...cookie setting unit, 232...cookie checking unit, 233...auction notification receiving unit, 234...bidding determination unit, 235...database, 236...user identifier information, 237...user browsing information, 238...advertisement bidding condition, 240...device for SSP, 241...user identifier issuing unit, 242...matching information registering unit, 243...cookie issuing program publishing unit, 244...function issuing unit, 245...cookie checking unit, 246...advertising slot notification receiving unit, 247...matching information referring unit, 248...advertisement identifier issuing unit, 249...auction notification unit, 250...auction processing unit, 251...parameter generation unit, 252...advertising source notification unit, 253...database, 254...matching information, 255...domain list, 256...browsing history, 260...device for advertisement auction, 280...device for DSP, 281...cookie issuing program publishing unit, 282...cookie checking unit, 283...auction notification receiving unit, 284...matching information notification unit, 285...bidding determination unit, 286...database, 287...user identifier information, 288...user browsing information, 289...advertisement bidding condition, 300...advertisement bidding device, 310...bidding determination unit, 311...database, 312...advertisement bidding condition, 400...client terminal, 410...CPU, 411...browser, 412...e-mail software, 420...storage device, 421...DSP cookie, 423...SSP cookie, 425...DMP cookie, 430...input device, 440...communication interface unit, 500...advertiser server, 510...website providing unit, 520...e-mail newsletter distributing unit, 530...database, 531...membership information, 600...device for bidding determination, 610...DMP unit, 611...cookie issuing program publishing unit, 612...cookie checking unit, 613...auction notification receiving unit, 614...matching information notification unit, 615...bidding determination unit, 616...database, 617...user identifier information, 618...user browsing information, 619...advertisement bidding condition, 620...membership information, 630...advertisement distribution unit, 631...database, 633...advertising source, 635...parameter information, N...the Internet

## Claims

1. An information processing system comprising:
means for setting, in a browser of a client terminal, a cookie on a domain of an advertising medium providing site containing a user identifier for identifying a user in response to a request from the client terminal based on a program contained in page information on the advertising medium providing site;
means for acquiring browsing information from the browser of the client terminal using the cookie on the domain of the advertising medium providing site;
means for receiving, from the client terminal having accessed the advertising medium providing site, a notification that an advertising display slot of the advertising medium providing site is present; and
means for determining a bidding condition for the advertising display slot of the advertising medium providing site using the browsing information.

2. The information processing system according to claim 1, further comprising:
means for checking a domain of the cookie set in the browser of the client terminal in response to the notification that the advertising display slot is present; and
notification means for notifying another information processing device that the advertising display slot is being auctioned, together with domain information on cookies set in the browser of the client terminal.

3. The information processing system according to claim 2, further comprising
means for managing a domain list related to a domain of an advertiser,
wherein when there is a cookie having the domain of the advertiser among the cookies set in the browser of the client terminal, the notification means notifies that the advertising display slot related to the client, on which the cookie having the domain of the advertiser is set, is being auctioned.

4. An information processing system comprising:
means for setting, in a browser of a client terminal, a first cookie on a domain of an advertising medium distributing site containing a first user identifier for identifying a user in response to a request from the client terminal based on a program contained in page information on the advertising medium distributing site;
means for managing matching information indicative of a correspondence relationship between a second user identifier set in a second cookie set on the client terminal by another information processing device, and the first user identifier;
means for receiving, from the client terminal having accessed the advertising medium distributing site, a notification that an advertising display slot of the advertising medium distributing site is present;
means for checking the first user identifier contained in the first cookie set on the client terminal; and
means for requesting the other information processing device to bid for the advertising display slot of the advertising medium distributing site along with the second user identifier associated with the first user identifier in the matching information.

5. The information processing system according to claim 4, further comprising
means for transmitting, to the client terminal, the first user identifier set in the first cookie and the second user identifier set in the second cookie.

6. The information processing system according to claim 4 or 5, further comprising
means for transmitting, to the client terminal, an advertising source related to an accepted advertisement as a result of an auction for the advertising display slot of the advertising medium distributing site,
wherein the advertising source contains link information to an advertiser's site containing information on the first user identifier.

7. The information processing system according to any one of claims 4 to 6, further comprising
means for receiving, from the client terminal, the first user identifier and information indicative of a correspondence relationship with the second user identifier.

8. The information processing system according to any one of claims 4 to 7, further comprising
means for receiving, from the other information processing device, the first user identifier and information indicative of the correspondence relationship with the second user identifier.

9. An information processing method executed by an information processing system, comprising:
a step of setting, in a browser of a client terminal, a cookie on a domain of an advertising medium providing site containing a user identifier for identifying a user in response to a request from the client terminal based on a program contained in page information on the advertising medium providing site;
a step of acquiring browsing information from the browser of the client terminal using the cookie on the domain of the advertising medium providing site;
a step of receiving, from the client terminal having accessed the advertising medium providing site, a notification that an advertising display slot of the advertising medium providing site is present; and
a step of determining a bidding condition for the advertising display slot of the advertising medium providing site using the browsing information.

10. An information processing method executed by an information processing system, comprising:
a step of setting, in a browser of a client terminal, a first cookie on a domain of an advertising medium distributing site containing a first user identifier for identifying a user in response to a request from the client terminal based on a program contained in page information on the advertising medium distributing site;
a step of managing matching information indicative of a correspondence relationship between a second user identifier set in a second cookie set on the client terminal by another information processing device, and the first user identifier;
a step of receiving, from the client terminal having accessed the advertising medium distributing site, a notification that an advertising display slot of the advertising medium distributing site is present;
a step of checking the first user identifier contained in the first cookie set on the client terminal; and
a step of requesting the other information processing device to bid for the advertising display slot of the advertising medium distributing site along with the second user identifier associated with the first user identifier in the matching information.
